(19) Europäisches Patentamt
European Patent Office
Office européen des brevets

(11) EP 4 789 547 A1

(12) **EUROPEAN PATENT APPLICATION**
published in accordance with Art. 153(4) EPC

(43) Date of publication:
**12.08.2026 Bulletin 2026/33**

(21) Application number: **24874770.1**

(22) Date of filing: **04.10.2024**

(51) International Patent Classification (IPC):
***A23L 5/00*** *(2016.01)*

(52) Cooperative Patent Classification (CPC):
**A23L 5/00**

(86) International application number:
**PCT/JP2024/035676**

(87) International publication number:
**WO 2025/075171 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.10.2023 JP 2023174766**

(71) Applicant: **FUJIFILM Corporation**
**Tokyo 106-8620 (JP)**

(72) Inventors:
- **MOCHIZUKI, Yusuke**
**Ashigarakami-gun, Kanagawa 258-8577 (JP)**
- **MATSUNO, Ryo**
**Ashigarakami-gun, Kanagawa 258-8577 (JP)**
- **HOKAZONO, Hirohisa**
**Ashigarakami-gun, Kanagawa 258-8577 (JP)**

(74) Representative: **HGF**
**HGF Limited**
**4th Floor, 1 City Square**
**Leeds LS1 2ES (GB)**

# (54) FAT MASS COMPOSITION AND METHOD FOR PRODUCING FAT MASS COMPOSITION

(57) A fat mass composition and a manufacturing method of a fat mass composition, the fat mass composition including a granular body containing oil and fat having a melting point of 0.1°C or higher, and an edible ionically crosslinkable polymer crosslinked with a cation, in which an average particle diameter of the granular body is 50 μm or more and 500 μm or less, and a swelling degree is 50% or more and 110% or less.

FIG. 3

100
101
102
A
B
110
104
106
107
103
108
109
105

## Description

### BACKGROUND OF THE INVENTION

1. Field of the Invention

The present disclosure relates to a fat mass composition and a manufacturing method of a fat mass composition.

2. Description of the Related Art

Livestock meat is a food material which is largely consumed all over the world. However, from the viewpoint of maintaining health, attempts have been made to control the intake of livestock meat and to consume meat-like food (hereinafter, may be referred to as "meat substitute") using vegetable protein derived from plants such as a soybean as a raw material.

Therefore, in recent years, attempts have been made to make a texture of a meat substitute closer to that of livestock meat, and for example, "a method for manufacturing meat-like food, the method including mixing an O/W type emulsion having an oil separation rate on compression of 15% or more and containing (a) protein, (b) oil and fat, and (c) water as main components, in a weight compositional ratio of a:b:c=1:7 to 40:1 to 20 with fibrous protein obtained by kneading a vegetable protein-containing material with water, orienting the vegetable protein-containing material by applying shear stress in a heated state, and then defibrating the vegetable protein-containing material and a binder such that the O/W type emulsion accounts for 5 to 50% by weight of a total weight of meat-like food, and then molding and heating a mixture." is proposed in JP1990-41315B (JP-H2-41315B).

In addition, for example, an improvement agent for seafood and livestock meat product containing oil-processed or fat-processed starch having a heating solubility of 3% to 25% and a heating swelling degree of 8 times to 17 times is disclosed (see JP2020-162560A).

### SUMMARY OF THE INVENTION

Meat substitutes currently on the market are meat substitutes having an appearance before cooking that is not similar to that of livestock meat, or meat substitutes having an appearance similar to that of ground livestock meat (livestock meat that is crushed and finely cut with a mincer or the like). However, livestock meat has a high demand as a cuboidal raw meat (chunk meat; the same applies hereinafter). Therefore, from the viewpoint of increasing a demand for meat substitutes, there is a demand for a meat substitute having an appearance similar to that of chunk meat.

In particular, in the meat substitute having an appearance similar to that of chunk meat, the appearance, texture, and palatability of an oil-containing or fat-containing portion are important.

Therefore, an object of an embodiment of the present disclosure is to provide a fat mass composition that is contained in a meat substitute having an appearance similar to that of chunk meat and that provides a texture close to beef tallow, and a manufacturing method of a fat mass composition.

The present disclosure includes the following aspects.

<1> A fat mass composition comprising: granular bodies containing oil and fat having a melting point of 0.1°C or higher; and

an edible and ionically crosslinkable polymer that is crosslinked with a cation,
in which an average particle diameter of the granular bodies is 50 μm or more and 500 μm or less, and
a swelling degree is 50% or more and 110% or less.

<2> The fat mass composition according to <1>, in which, in at least one cross section of the fat mass composition perpendicular to a longitudinal direction, in a case where a length of a line having a maximum length between two points is denoted by b and a length of a line having a maximum length among lines perpendicular to the line having the maximum length between the two points is denoted by a, b/a is 2.00 or more.

<3> The fat mass composition according to <1> or <2>, in which the fat mass composition contains 500 ppm or more of a divalent cation and 500 ppm or more of a monovalent cation.

<4> A manufacturing method of a fat mass composition, the manufacturing method comprising:

(1) a step of forming liquid droplets containing oil and fat in an aqueous solution (hereinafter, also referred to as "liquid droplet forming step");
(2) a step of solidifying the oil and fat in the liquid droplets to obtain particles containing the solidified oil and fat

(hereinafter, also referred to as "oil and fat solidification step");
(3) a step of adding an aqueous solution containing an edible and ionically crosslinkable polymer to the particles to obtain a crude fat mass forming mixture (hereinafter, also referred to as "mixing step");
(4) a step of bringing the crude fat mass forming mixture into contact with a liquid containing a cation to produce a fat mass composition precursor (hereinafter, also referred to as "precursor production step");
(5) a step of shaping the fat mass composition precursor (hereinafter, also referred to as "shaping step"); and
(6) a step of performing dropwise addition of the shaped fat mass composition precursor to a curing liquid containing a cation to obtain a fat mass composition (hereinafter, also referred to as "crosslinking step").

<5> The manufacturing method of a fat mass composition according to <4>, further comprising: (7) a step of immersing the obtained fat mass composition in an aqueous salt solution containing a monovalent cation to adjust a swelling degree (hereinafter, also referred to as "swelling degree adjustment step").

According to an embodiment of the present disclosure, there are provided a fat mass composition that is contained in meat substitute having an appearance similar to that of chunk meat and that provides a texture close to beef tallow, and a manufacturing method of a fat mass composition.

## BRIEF DESCRIPTION OF THE DRAWINGS

FIG. 1 is a top view showing an embodiment of a fat mass composition of the present disclosure.
FIG. 2 is a cross-sectional view taken along line A-A of the fat mass composition shown in FIG. 1.
FIG. 3 is a schematic view showing an embodiment of a manufacturing apparatus that can be used in a manufacturing method of a fat mass composition of the present disclosure.

## DESCRIPTION OF THE PREFERRED EMBODIMENTS

Hereinafter, an embodiment which is an example of a fat mass composition and a manufacturing method for a fat mass composition according to the present disclosure will be described. These descriptions and examples are only illustrative of the embodiments and do not limit the scope of the invention.
In a numerical range described in a stepwise manner in the present disclosure, an upper limit or a lower limit described in one numerical range may be replaced with an upper limit or a lower limit in another numerical range described in a stepwise manner. In addition, in the numerical ranges described in the present disclosure, the upper limit value or the lower limit value of the numerical range may be replaced with the value shown in Examples.
Each component may contain a plurality of kinds of substances corresponding thereto.
In a case where the amount of each component in a composition is referred to, and in a case where a plurality of substances corresponding to each component in the composition are present, it means the total amount of a plurality of substances present in the composition, unless otherwise specified.
In the present disclosure, the term "step" is included not only in an independent step but also in this term as long as an intended purpose of the step is achieved, even in a case where the step cannot be clearly distinguished from other steps.
In the present disclosure, a combination of two or more preferred aspects is a more preferred aspect.
In the present disclosure, in a case where an embodiment is described with reference to the drawing, the configuration of the embodiment is not limited to the configuration shown in the drawing. Further, the sizes of the members in each drawing are conceptual, and the relative relationship between the sizes of the members is not limited thereto.
In the present disclosure, the "texture close to beef tallow" means a texture in which a crispy texture that is not present in beef tallow is not felt, as in the capsule oil and fat in the related art.

<Fat mass composition>

A fat mass composition (hereinafter, also referred to as a specific fat mass composition) according to an embodiment of the present disclosure includes a granular body containing an oil and fat having a melting point of 0.1°C or higher, and an edible ionically crosslinkable polymer crosslinked with a cation, in which an average particle diameter of the granular body is 50 μm or more and 500 μm or less, and a swelling degree is 50% or more and 110% or less.
Since the specific fat mass composition can provide a texture close to beef tallow, according to the specific fat mass composition, it is possible to produce a meat substitute having an appearance and a texture similar to those of chunk meat. The reason therefor is presumed as follows.

Here, in the present disclosure, the "chunk meat" is uncooked raw livestock meat cut out from livestock for meat in any size, and refers to livestock meat that is not crushed or finely cut after being cut out from the livestock. In many cases, the fat on the surface of the chunk meat has an elongated shape.

In the specific fat mass composition, the average particle diameter of the granular body containing the oil and fat is 50 μm or more and 500 μm or less, so that the specific fat mass composition exhibits an appearance similar to the oil and fat content present inside the chunk meat, and provides a texture close to moderate beef tallow.

Furthermore, the swelling degree of the specific fat mass composition is 50% or more and 110% or less, so that a texture similar to beef tallow is provided, and the expression of a crispy texture that is not felt in beef tallow, which is contained in capsule oil and fat as a fat mass composition known in the related art, is suppressed.

The present inventors have found, as a new finding, that the texture suitable for the fat mass composition is provided by controlling the swelling degree of the specific fat mass composition within a predetermined range, as a result of studying the problem that the capsule oil and fat in the related art is too soft due to the crosslinking conditions, or is too hard and provides a crispy texture that is not present in beef tallow.

(Granular body containing oil and fat having melting point of 0.1°C or higher)

The fat mass composition according to the present disclosure contains a granular body containing oil and fat having a melting point of 0.1°C or higher. Hereinafter, the granular body containing oil and fat having a melting point of 0.1°C or higher is also referred to as a granular body according to the present disclosure.

-Composition of granular body according to present disclosure-

The granular body according to the present disclosure contains oil and fat having a melting point of 0.1°C or higher, and contains water and other additives as necessary.

· Oil and fat

The oil and fat contained in the granular body is not particularly limited as long as the melting point is 0.1°C or higher, and examples thereof include vegetable oil and fat, animal oil and fat, and fatty acids.

Here, the fatty acid is a monovalent carboxylic acid of a long-chain hydrocarbon and is represented by a general formula $C_nH_mCOOH$ (n and m are an integer of 1 or more).

Examples of the vegetable oil and fat include rapeseed oil, soybean oil, palm oil, olive oil, coconut oil, rice oil, corn oil, coconut oil, and canola oil.

Examples of the animal oil and fat include beef tallow, pork lard, whale oil, and fish oil.

Examples of the fatty acid include saturated fatty acids such as lauric acid, stearic acid, isostearic acid, palmitic acid, myristic acid, arachidic acid, and behenic acid; and unsaturated fatty acids such as oleic acid, linoleic acid, α-linolenic acid, eicosenoic acid, and erucic acid.

From the viewpoint of increasing the release amount of the oily component in a case where the fat mass composition is chewed, the oil and fat contained in the granular body is preferably the oil and fat is at least one selected from coconut oil, olive oil, palm oil, canola oil, or oleic acid.

The melting point of the oil and fat contained in the granular body according to the present disclosure is 0.1°C or higher, preferably 1°C to 30°C, more preferably 2°C to 30°C, and still more preferably 5°C to 30°C.

In a case where the melting point of the oil and fat is 0.1°C or higher, the granular body is more easily formed in the production of the fat mass composition described later. In addition, in a case where the melting point of the oil and fat is 1°C or higher as a preferred aspect, the structure of the fat mass composition is a structure similar to the structure of the fat portion contained in the livestock meat. As a result, the oil component is easily released from the fat mass composition during chewing, similarly to the fat portion of the livestock meat.

In addition, the upper limit of the melting point of the oil and fat is not particularly limited, but is preferably 30°C or lower. In a case where the melting point of the oil and fat is 30°C or lower, in the production of the fat mass composition described later, the fat mass composition containing water is easily produced in the granular body at room temperature (for example, 25°C), and the production step is likely to be simplified.

The melting point of the oil and fat is measured in accordance with "Standard Methods for the Analysis of Fats, Oils, and Related Materials 2.2.4.2 (1996), 1996 edition", enacted by the Japan Oil Chemists' Society"

The content of the oil and fat is preferably 10% to 98% by mass, more preferably 20% to 95% by mass, and still more preferably 25% to 90% by mass with respect to the total mass of the fat mass composition.

· Water:

In a certain use application, it is preferable that the granular body contains water.

The water may be any water that can be used for a food product and is not particularly limited.

In a case where the granular body contains water, the water is also released from the fat mass composition in addition to the oil and fat in a case where the fat mass composition is chewed, which may easily make the food texture closer to that of the fatty meat contained in the livestock meat.

In addition, in a case where the granular body contains water, it is easy to incorporate water-soluble components (for example, a seasoning such as a palatable ingredient, and a flavoring agent) into the granular body, and it is easier to produce a food texture similar to that of the fatty meat contained in the livestock meat.

The content of the water in a case where the granular body contains water is preferably 1% to 90% by mass, more preferably 5% to 70% by mass, and still more preferably 10% to 50% by mass with respect to the amount of the oil and fat contained in the granular body.

· Other additives

Examples of the other additives that can be contained in the granular body according to the present disclosure include a seasoning, an acidulant, a bittering agent, a spice, a sweetener, an antioxidant, a coloring agent, a color former, a flavoring agent, a stabilizer, and a preservative.

As the flavoring agent, for example, a compound group that imparts a beef tallow flavor to the oil and fat contained in the granular body may be added. Examples of the compound that imparts a beef tallow flavor to the oil and fat include tallow oil obtained by squeezing oil from beef tallow, non-animal beef tallow-flavored oil obtained by combining non-animal materials to have a beef tallow flavor, vegetable beef tallow-flavored oil obtained by blending a component extracted from a plant-derived material, and microorganism-derived beef tallow-flavored oil obtained by blending a microorganism-derived component.

Since the compound that imparts a beef tallow flavor to the oil and fat is used as a material for a meat substitute, non-animal beef tallow-flavored oil, vegetable beef tallow-flavored oil, or microorganism-derived beef tallow-flavored oil is preferable.

The content of the other additives is preferably 0% to 5% by mass with respect to the total mass of the granular body.

- Characteristics of granular body -

· Average particle diameter of granular bodies

The average particle diameter of the granular body is 50 μm to 500 μm, preferably 50 μm to 400 μm, and more preferably 90 μm to 300 μm.

In a case where the average particle diameter of the granular body is set to 50 μm or more, the amount of oil released in a case where the fat mass composition is chewed is likely to be improved.

In addition, in a case where the average particle diameter of the granular body is set to 500 μm or less, the particle diameter of the granular body is small, and thus, in a case where the fat mass composition is visually observed, it is difficult to visually recognize that a large number of granular bodies are contained in the fat mass composition. Therefore, the appearance of the fat mass composition is also closer to that of the fatty meat contained in the livestock meat.

Further, in a case of setting the average particle diameter of the granular bodies to 500 μm or less, the particle diameter of the granular body is reduced, and thus the feeling on the tongue in a case of eating the fat mass composition tends to be smooth. Therefore, the food texture of the fat mass composition tends to be better.

The average particle diameter of the granular bodies is measured by observing the fat mass composition with a transmission optical microscope.

As the transmission microscope, it is possible to use, for example, an inverted microscope Axio Observer. Z1 or the like.

Hereinafter, a measurement procedure for the average particle diameter of the granular bodies will be described.

The fat mass composition is immersed in a 100 mM aqueous solution of sodium ethylenediamine-N,N,N',N'-tetraacetate (manufactured by FUJIFILM Wako Pure Chemical Corporation) for 1 hour, and the granular body floating after 1 hour is subjected to specific gravity separation to recover the granular body from the fat mass composition, and the granular body is placed on a polystyrene petri dish having a diameter of 60 mmΦ. In this case, the recovered granular body is prevented from overlapping in a depth direction of the petri dish. Then, the granular bodies recovered in the petri dish are observed with a transmission optical microscope and imaged at an objective magnification of 5 times. 200 or more images of the granular body included in the screen obtained by imaging are selected, and the equivalent circle diameter (diameter

of a perfect circle corresponding to the area of the image of the granular body) of each granular body is calculated by image processing software (for example, ImageJ). An arithmetic average value of the calculated equivalent circle diameters of the respective granular bodies is calculated, and the arithmetic average value thereof is defined as the average particle diameter of the granular bodies.

· CV value of particle diameter of granular body

The coefficient of variation (CV) value of the particle diameter of the granular body is preferably 30% or less, more preferably 25% or less, and still more preferably 20% or less.

A granular body having a small particle diameter contains a small amount of the oil and fat encompassed therein. Therefore, in a case where a granular body having a small particle diameter is contained, the release amount of the oily component in a case where the fat mass composition is chewed tends to be small. On the other hand, a granular body having a large particle diameter is unstable, and thus the oil and fat easily leaks from the granular body in a case of carrying out cooking such as heat cooking.

From the above, in order to obtain a fat mass composition which contains a large amount of oil and fat and is stably held during storage, but has a large amount of oil released in a case of chewing, it is preferable that the variation in particle diameter due to the presence of the granular body having a small particle diameter and the granular body having a large particle diameter is small. That is, from the viewpoint of further stabilizing the amount of oil released in a case of chewing, it is preferable that the particle size distribution of the granular body contained in the fat mass composition is narrow.

In a case of setting the CV value of the particle diameter of the granular body to 30% or less, the granular body contained in the fat mass composition tends to be a state in which the particle diameter thereof is close to uniform. Therefore, it is easy to obtain a fat mass composition having a large release amount of an oily component in a case of being chewed.

The CV value of the particle diameter is a value obtained according to the following expression.

Expression: CV value (%) of particle diameter = (standard deviation of equivalent circle diameter of granular body/ average particle diameter of granular body) × 100

Here, the average particle diameter of the granular bodies is a value measured by the method described above.

In addition, the standard deviation of the equivalent circle diameter of the granular body is the standard deviation of the equivalent circle diameters of 200 granular bodies, which is calculated in the measurement of the average particle diameter of the granular bodies.

(Edible and ionically crosslinkable polymer that is crosslinked with cations)

The fat mass composition according to the present disclosure contains an edible ionically crosslinkable polymer crosslinked with a cation.

Here, the "edible" means having a property which does not adversely affect a health condition in a case where a substance is orally subjected to dietary intake by a human.

The "ionically crosslinkable polymer" means a polymer which is cross-linked by a reaction with an ion.

Examples of the edible and ionically crosslinkable polymer include polysaccharides having at least one kind of group selected from the group consisting of a carboxy group, a carboxylate anion group ($-COO^-$), a sulfo group, and a sulfonate anion group ($-SO_3^-$).

Examples of the edible ionically crosslinkable polymer include alginic acid, carrageenan, low methoxyl (LM pectin), high methoxyl (HM pectin), and low acyl (LA) gellan gum.

From the viewpoint of improving heat resistance of the fat mass composition, the edible and ionically crosslinkable polymer is preferably at least one selected from the group consisting of alginic acid, LM pectin, and LA gellan gum.

A viscosity of a 1% by mass aqueous solution of the edible ionically crosslinkable polymer (aqueous solution containing 1% by mass of the ionically crosslinkable polymer with respect to the entire aqueous solution) is preferably 10 mPa·s to 3,000 mPa·s and more preferably 20 mPa·s to 1,000 mPa·s.

The viscosity of the aqueous solution of 1% by mass of the edible and ionically crosslinkable polymer is a value measured with a tuning fork vibration type viscometer under a temperature condition of 20°C.

As the tuning fork vibration type viscometer, for example, SV-10 (manufactured by A&D Company, Limited) can be used.

The cation is preferably a metal ion having an ion valence of 2 or more.

Examples of the metal ion include divalent metal ions such as a calcium ion, a magnesium ion, an iron ion (II), a copper ion (II), a zinc ion, and a manganese ion; and trivalent metal ions such as an aluminum ion and an iron ion (III).

From the viewpoint of obtaining a stable crosslinking structure, the metal ion is preferably at least one selected from a calcium ion, a magnesium ion, or a zinc ion, and more preferably a calcium ion.

A content of the edible ionically crosslinkable polymer crosslinked with a cation is preferably 0.01% to 20% by mass, more preferably 0.1% to 10% by mass, and still more preferably 0.5% to 5% by mass with respect to the total mass of the fat mass composition.

Among these, the fat mass composition according to the present disclosure preferably contains 100 ppm or more of a divalent cation and preferably contains 200 ppm or more of a monovalent cation.

The fat mass composition more preferably contains 500 ppm or more of a divalent cation and 500 ppm or more of a monovalent cation.

Examples of the divalent cation include at least one selected from a calcium ion, a magnesium ion, an iron ion (II), a copper ion (II), a zinc ion, or a manganese ion, and among these, a calcium ion is preferable.

The fat mass composition according to the present disclosure may contain only one kind of divalent cation or may contain two or more kinds thereof.

A content of the divalent cation in the fat mass composition according to the present disclosure is more preferably 500 ppm or more, still more preferably 700 ppm or more, and particularly preferably 1,000 ppm or more. The upper limit of the content of the divalent cation is not particularly limited, but can be set to 10,000 ppm or less from the viewpoint of easily achieving a preferable swelling degree from the viewpoint of texture described later.

Examples of the monovalent cation include at least one selected from a sodium ion or a potassium ion, and among these, a sodium ion is preferable.

The fat mass composition according to the present disclosure may contain only one kind of monovalent cation or may contain two or more kinds thereof.

A content of the monovalent cation in the fat mass composition according to the present disclosure is preferably 500 ppm or more, more preferably 700 ppm or more, and still more preferably 900 ppm or more. The upper limit of the content of the monovalent cation is not particularly limited, but can be set to 10,000 ppm or less from the viewpoint of easily achieving a preferable swelling degree from the viewpoint of texture described later.

The contents of the monovalent cation and the divalent cation in the fat mass composition according to the present disclosure are measured by the following method.

Using a single-edged razor, three samples (about 100 mg) of the central portion of the fat mass composition cut into a ring shape are prepared. Each of the ring-shaped samples is transferred to a Teflon (registered trademark) vial container.

60% by mass of an aqueous nitric acid solution (5 mL) is added to each of the vial containers containing the samples, and the mixture is ashed, and then the mixture is diluted to 50 mL with pure water. The Na and Ca are quantified by ICP-OES (absolute calibration curve method) using the diluted solution.

(Swelling degree)

The swelling degree of the fat mass composition according to the present disclosure is 50% or more and 110% or less, preferably 50% or more and 105% or less, and more preferably 50% or more and 100% or less.

In a case where the swelling degree is 50% or more, the fat mass composition is less likely to exhibit a crispy texture that is not like beef tallow, and has a texture similar to that of beef tallow. In addition, in a case where the swelling degree is 110% or less, the fat mass composition has an appropriate hardness, and the shape retention and the maintainability of the aroma, taste, and the like due to the seasoning and the like contained in the fat mass composition are improved.

(Method for measuring swelling degree)

The swelling degree of the specific fat mass composition according to the present disclosure is measured by the following method.

A sample obtained by freezing the specific fat mass composition (size: 1 piece: about 1.5 cm × 3.0 cm) at -20°C is produced. The frozen sample is thawed at room temperature (25°C), and then each piece is put into a vial container (maker: Nittoseiko Glass Co., Ltd., model number: SV-30), and dried in an oven (maker: AS ONE Corporation, model number: DO-450PC) at 80°C for 5 hours to obtain a dried product of the sample, and the dry mass is measured.

Thereafter, 20 mL of deionized water is put into the vial container, and the dried product of the sample is swollen at 5°C for 24 hours. The swollen sample is placed on a kimtowel (registered trademark: Nippon Paper Crecia Co., Ltd.) at room temperature, and another kimtowel is placed on the sample to remove water on the surface of the sample and remove excess moisture. The mass of the drained sample is measured, and the measured value is defined as the mass after water absorption.

The swelling degree is obtained by the following expression from the dry mass of the sample and the mass after

water absorption.

swelling degree (%) = [(mass after water absorption - dry mass)/dry mass] × 100 Expression:

The measurement is performed three times by replacing the sample, and the average value thereof is defined as the swelling degree of the sample.

The swelling degree can be controlled by adjusting, for example, the concentration of the divalent cation contained in the edible ionically crosslinkable polymer solution, the concentration of the divalent cation in the curing liquid used in curing the fat mass composition, the contact time between the mixed solution and the curing liquid, the concentration of the monovalent cation in the swelling degree adjustment step, the immersion time, the temperature, the stirring speed, and the like.

The concentration of the divalent cation contained in the edible ionically crosslinkable polymer solution is preferably 0.01% to 10% by mass, more preferably 0.02% to 9% by mass, and still more preferably 0.03% to 8% by mass.

The contact time between the mixed solution and the curing liquid is preferably 1 minute to 1,500 minutes, more preferably 1.5 minutes to 1,000 minutes, and still more preferably 2 minutes to 960 minutes.

The concentration of the monovalent cation in the swelling degree adjustment step is preferably 0.1% to 20% by mass, more preferably 0.2% to 18% by mass, and still more preferably 0.3% to 15% by mass.

The immersion time of the monovalent cation in the swelling degree adjustment step is preferably 1 minute to 960 minutes, more preferably 2 minutes to 600 minutes, and still more preferably 5 minutes to 500 minutes.

The temperature in the swelling degree adjustment step is preferably 2°C to 25°C, more preferably 3°C to 23°C, and still more preferably 4°C to 20°C.

In the swelling degree adjustment step, the liquid may or may not be stirred.

Examples of the stirring method in a case where the liquid is stirred include stirring with a blade, shaking, perfusion, and magnetic stirrer stirring, and any of these stirring methods can be used. Among the stirring methods in a case where the liquid is stirred, stirring with a blade or stirring by shaking is suitable.

(Preferred shape of fat mass composition)

In at least one cross section of the fat mass composition according to the present disclosure, which is perpendicular to the longitudinal direction, in a case where a length of a line having a maximum length between two points is denoted as b and a length of a line having a maximum length among lines perpendicular to the line having the maximum length between the two points is denoted as a, b/a is preferably 2.00 or more.

From the viewpoint of making the appearance of the meat substitute closer to the appearance of the chunk meat, b/a is preferably 2.20 or more, more preferably 2.40 or more, and still more preferably 2.60 or more. From the viewpoint of making the appearance of the meat substitute closer to the appearance of the chunk meat, b/a is preferably 50.00 or less, more preferably 30.00 or less, still more preferably 10.00 or less, and particularly preferably 5.00 or less.

From the viewpoint of making the appearance of the meat substitute closer to the appearance of the chunk meat, b/a is preferably 2.00 to 50.00.

From the viewpoint of making the appearance of the meat substitute closer to the appearance of the chunk meat, the length a is preferably 0.5 mm to 8.0 mm, and more preferably 1.0 mm to 6.0 mm.

From the viewpoint of making the appearance of the meat substitute closer to the appearance of the chunk meat, the length b is preferably 1.0 mm to 16.0 mm, and more preferably 3.0 mm to 12.0 mm.

In the longitudinal direction of the fat mass composition, in a case where a maximum value of the length b is denoted as b1 and a minimum value of the length b is denoted as b2, from the viewpoint of making the appearance of the meat substitute closer to the appearance of the chunk meat, b2/b1 is preferably 0.90 or less, more preferably 0.80 or less, and still more preferably 0.70 or less. From the viewpoint of making the appearance of the meat substitute closer to the appearance of the chunk meat, b2/b1 is preferably 0.45 or more.

From the viewpoint of making the appearance of the meat substitute closer to the appearance of the chunk meat, b2/b1 is preferably 0.45 to 0.90.

In a case where the length of the fat mass composition in the longitudinal direction is denoted as c, from the viewpoint of making the appearance of the meat substitute closer to the appearance of the chunk meat, c/b is preferably 1.00 or more, more preferably 2.00 or more, and still more preferably 2.50 or more. From the viewpoint of making the appearance of the meat substitute closer to the appearance of the chunk meat, c/b is preferably 25.00 or less. From the viewpoint of making the appearance of the meat substitute closer to the appearance of the chunk meat, c/b is preferably 1.00 to 25.00.

From the viewpoint of making the appearance of the meat substitute closer to the appearance of the chunk meat, the length c is preferably 5.0 mm to 150.0 mm, more preferably 10.0 mm to 100.0 mm, and still more preferably 15.0 mm to

70.0 mm.

In a case where a length of a line having a minimum length among lines that are perpendicular to the line having the maximum length between two points and have a ratio of a length to the line having the maximum length between two points of 0.10 or more is denoted as d, from the viewpoint of making the appearance of the meat substitute closer to the appearance of the chunk meat, d/a is preferably 0.80 or less, more preferably 0.70 or less, and still more preferably 0.60 or less. From the viewpoint of making the appearance of the meat substitute closer to the appearance of the chunk meat, d/a is preferably 0.05 or more. From the viewpoint of making the appearance of the meat substitute closer to the appearance of the chunk meat, d/a is preferably 0.05 to 0.80.

From the viewpoint of making the appearance of the meat substitute closer to the appearance of the chunk meat, the length d is preferably 0.1 mm to 3.0 mm, more preferably 0.1 mm to 2.5 mm, and still more preferably 0.2 mm to 2.5 mm.

In the present disclosure, the lengths a, b, c, and d are measured by imaging a cross section and a longitudinal direction of the fat mass composition using a digital camera and a scale (for example, glass reference scale 100 mm, 500 divisions, line width: 0.005 mm, manufactured by SHIBUYA ENGINEERING Co., Ltd.) and using image processing software (for example, ImageJ).

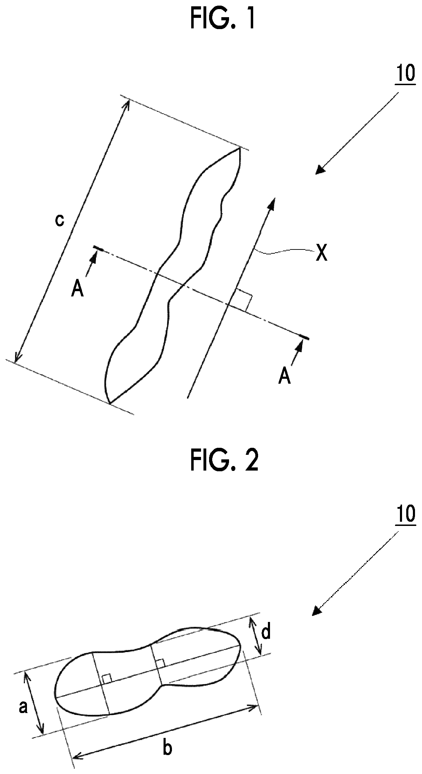

Next, the lengths a, b, c, and d will be described with reference to FIG. 1. The fat mass composition of the present disclosure is not limited to those shown in FIGS. 1 and 2.

FIG. 1 is a top view showing an embodiment of the specific fat mass composition, and FIG. 2 is a cross-sectional view of the specific fat mass composition shown in FIG. 1 taken along line A-A.

As shown in FIG. 1, the line A-A is perpendicular to the longitudinal direction (direction of arrow X in FIG. 1) of the specific fat mass composition 10.

In FIG. 1, the length of the specific fat mass composition 10 in the longitudinal direction is indicated by reference numeral c.

FIG. 2 shows a cross section of the fat mass composition 10 perpendicular to the longitudinal direction.

In the cross section (cross section taken along line A-A) perpendicular to the longitudinal direction of the fat mass composition 10, the length of the line having the maximum length between two points is indicated by reference numeral b in FIG. 2.

In the cross section (cross section taken along line A-A) perpendicular to the longitudinal direction of the fat mass composition 10, the length of the line having the maximum length among the lines perpendicular to the line having the maximum length between two points is indicated by reference numeral a in FIG. 2.

In the cross section (cross section taken along line A-A) perpendicular to the longitudinal direction of the specific fat mass composition 10, the length of the line having the minimum length among the lines perpendicular to the line having the maximum length between two points and having a length ratio of 0.10 or more with respect to the line having the maximum length between two points is indicated by reference numeral d in FIG. 2.

(Other Components)

The specific fat mass composition can further contain other components in addition to the granular body containing oil and fat having a melting point of 0.1°C or higher and the edible ionically crosslinkable polymer, as long as the effects of the present disclosure are not impaired.

Examples of the other components include a surfactant, a seasoning, an acidulant, a bittering agent, a spice, a sweetener, an antioxidant, a coloring agent, a color former, a flavoring agent, a stabilizer, and a preservative.

The seasoning, the acidulant, the bittering agent, the spice, the sweetener, the antioxidant, the coloring agent, the color former, the flavoring agent, the stabilizer, the preservative, and the like, which are other components, may be contained in a gel containing an edible ionically crosslinkable polymer crosslinked with a cation, which will be described later, which can be contained in the specific fat mass composition.

- Surfactant -

The specific fat mass composition preferably contains a surfactant.

In a case where the fat mass composition contains a surfactant, the release amount of the oil and fat is further increased in a case where the fat mass composition after heating and cooking is chewed. The reason therefor is presumed as follows.

In a case where the granular bodies in the fat mass composition are in contact with each other, the oil and fat easily leaks from the granular bodies during heat cooking. As a result, the release amount of the oil and fat is easily reduced in a case where the fat mass composition after heat cooking is chewed.

In a case where a surfactant is contained, the compatibility between the granular bodies and the ionically crosslinkable polymer is likely to be favorable, and the ionically crosslinkable polymer is likely to be present in the gaps between the granular bodies. As a result, the granular bodies tend to be appropriately spaced from each other, and the

leakage of the oil and fat from the granular bodies during heat cooking is suppressed. As a result, the release amount of the oil and fat in a case where the fat mass composition after heat cooking is chewed is increased.

Examples of the surfactant include an edible surfactant.

Examples of the edible surfactant include a glycerin fatty acid ester, a polyglycerin fatty acid ester, an organic acid monoglyceride, a sorbitan fatty acid ester, a propylene glycol fatty acid ester, a sucrose fatty acid ester, a polyglycerin condensed ricinoleic acid ester, and lecithin.

The glycerin fatty acid ester preferably contains monoglyceride as a main component.

Here, the main component refers to that the content of monoglyceride is 90% by mass or more with respect to the entire glycerin fatty acid ester.

The monoglyceride is preferably a monoesterified product of a saturated or unsaturated fatty acid having 2 or more and 24 or less carbon atoms and glycerin.

Examples of the fatty acid include behenic acid, stearic acid, and palmitic acid.

The glycerin fatty acid ester may contain diglyceride.

The diglyceride is preferably a diesterified product of a saturated or unsaturated fatty acid having 2 or more and 24 or less carbon atoms and glycerin.

The polyglycerin fatty acid ester is preferably an esterified product of a saturated or unsaturated fatty acid having 2 or more and 24 or less carbon atoms and polyglycerin.

Specific examples of the polyglycerin fatty acid ester include polyglyceryl monomyristate, polyglyceryl dimyristate, polyglyceryl trimyristate, polyglyceryl monopalmitate, polyglyceryl dipalmitate, polyglyceryl tripalmitate, polyglyceryl monostearate, polyglyceryl distearate, polyglyceryl tristearate, polyglyceryl monoisostearate, polyglyceryl diisostearate, polyglyceryl triisostearate, polyglyceryl monooleate, polyglyceryl dioleate, and polyglyceryl trioleate.

The organic acid monoglyceride is obtained by further esterifying a hydroxyl group derived from glycerin of monoglyceride by using an organic acid.

Examples of the organic acid include citric acid, succinic acid, acetic acid, and lactic acid, and citric acid or succinic acid is preferable and citric acid is more preferable.

The sorbitan fatty acid ester refers to an esterified product of sorbitan and a fatty acid.

The sorbitan fatty acid ester is preferably an esterified product of sorbitan and a saturated or unsaturated fatty acid having 2 or more and 18 or less carbon atoms.

Specific examples of the sorbitan fatty acid ester include sorbitan monocaprate, sorbitan monolaurate, sorbitan monopalmitate, sorbitan monostearate, sorbitan distearate, sorbitan sesquistearate, sorbitan tristearate, sorbitan trioleate, sorbitan monoisostearate, sorbitan sesquiisostearate, sorbitan monooleate, sorbitan sesquioleate, and sorbitan of Cocos nucifera oil fatty acid.

The propylene glycol fatty acid ester is an esterified product of a fatty acid and propylene glycol.

The fatty acid which is used for the synthesis of the propylene glycol fatty acid ester is preferably a saturated or unsaturated fatty acid having 2 or more and 24 or less carbon atoms.

Specific examples of the propylene glycol fatty acid ester include a propylene glycol palmitic acid ester, a propylene glycol stearic acid ester, and a propylene glycol behenic acid ester.

The sucrose fatty acid ester is an esterified product of sucrose and a fatty acid.

The fatty acid which is used for the synthesis of the sucrose fatty acid ester is preferably a saturated or unsaturated fatty acid having 2 or more and 24 or less carbon atoms.

The sucrose fatty acid ester is preferably an esterified product of one or two or more fatty acids selected from the group consisting of caprylic acid, capric acid, lauric acid, myristic acid, palmitic acid, palmitoleic acid, stearic acid, oleic acid, arachidic acid, and behenic acid, and sucrose.

The polyglycerin condensed ricinoleic acid ester is an esterified product of a polyglycerin fatty acid ester and a ricinoleic acid condensate.

Specific examples of the polyglycerin condensed ricinoleic acid ester include an esterified product of the compound described as a specific example of the polyglycerin fatty acid ester described above and a ricinoleic acid condensate.

The lecithin refers to phosphatidylcholine itself or a mixture containing at least phosphatidylcholine.

The mixture containing at least phosphatidylcholine is generally a mixture that can contain, in addition to phosphatidylcholine, phosphatidylserine, phosphatidylethanolamine, phosphatidylinositol, N-acylphosphatidylethanolamine, phosphatidylglycerol, phosphatidic acid, lysophosphatidylcholine, lysophosphatidic acid, sphingomyelin, sphingoethanolamine, and the like.

As the lecithin, it is possible to use an enzymatically degraded lecithin (so-called lysolecithin).

The enzymatically degraded lecithin is a composition containing lysophosphatidylcholine in which one fatty acid of the phosphatidylcholine molecule is lost by an enzyme such as phospholipase. In the fat mass composition, the enzyme-decomposed lecithin includes so-called hydrogenated enzyme-decomposed lecithin in which the oxidation stability is improved by performing a hydrogenation treatment to convert the bonded fatty acid into a saturated fatty acid.

One kind of the surfactant may be used alone, or two or more kinds thereof may be used in combination.

From the viewpoint of emulsification dispersibility, the HLB value of the surfactant is, for example, preferably 8 or more, more preferably 10 or more, and still more preferably 12 or more.

The upper limit of the HLB value of the emulsifier is not particularly limited, but it is generally 20 or less and preferably 18 or less. The HLB value of the emulsifier is preferably 8 to 20.

HLB generally means hydrophilic-hydrophobic balance, which is a term used in the field of surfactant. The HLB value is calculated using the kawakami formula shown below. It is noted that in a case where a commercially available product is used as the surfactant, the commercially available catalog data is preferentially adopted.

$$HLB = 7 + 11.7\log(Mw/Mo)$$

Here, Mw indicates a molecular weight of a hydrophilic group of a surfactant, and Mo indicates a molecular weight of the hydrophobic group of the surfactant.

The hydrophobic group of the surfactant is an atomic group having low affinity for water in the surfactant. Examples of the hydrophobic group include an alkyl group, an alkenyl group, an alkylsilyl group, and a perfluoroalkyl group. Specifically, it refers to an alkyl group or an alkenyl group, which is derived from a fatty acid, in a case where the surfactant is "a glycerin fatty acid ester, a polyglycerin fatty acid ester, an organic acid monoglyceride, a sorbitan fatty acid ester, a propylene glycol fatty acid ester, a sucrose fatty acid ester, a polyglycerin condensed ricinoleic acid ester, or lecithin", which is described above.

The hydrophilic group of the surfactant is an atomic group having high affinity for water in the surfactant. Specifically, it refers to an atomic group other than the hydrophobic group in the structure of the surfactant.

A Hansen solubility parameters (HSP) distance between the ionically crosslinkable polymer and the hydrophilic moiety of the surfactant is preferably 10 or less, more preferably 9 or less, and still more preferably 8 or less.

In a case where the granular bodies in the fat mass composition are in contact with each other, the oil and fat easily leaks from the granular bodies during heat cooking. As a result, the release amount of the oil and fat is easily reduced in a case where the fat mass composition after heat cooking is chewed.

In a case where the HSP distance between the ionically crosslinkable polymer and the hydrophilic moiety of the surfactant is within the numerical range described above, the ionically crosslinkable polymer is likely to be present in the gaps between the granular bodies. As a result, the granular bodies tend to be appropriately spaced from each other, and the oil and fat hardly leaks from the granular bodies during heat cooking. Along with this, the release amount of the oil and fat in a case where the fat mass composition after heat cooking is chewed is increased.

The HSP distance can be adjusted by changing the structure of the hydrophilic moiety of each of the ionically crosslinkable polymer and the surfactant.

The HSP distance is obtained by combining three kinds of cohesive energy density values ($\delta D$: dispersion element, $\delta P$: dispersion pole, and $\delta H$: hydrogen bond element), and the unit of each of them is $[J/cm^3]^{1/2}$.

The HSP distance is calculated as follows.

The HSP distance can be acquired as a registered value or an estimated value in HSPiP 4th Edition, version 4.0.04, which is commercially available software.

This software is available from a site such as http://hansen-solubility.com/index.html". In addition, a document by Hansen et al. (for example, C. M. Hansen solubility parameters: a user's handbook 2nd edition, CEC press, 2007, ISBN-10: 0849372488) can be referenced in order to determine HSP based on such software.

The content of the surfactant with respect to the total mass of the fat mass composition is preferably 0.05% to 2% by mass and more preferably 0.10% to 1% by mass.

(Gel containing edible ionically crosslinkable polymer crosslinked with cation)

The fat mass composition according to the present disclosure preferably includes a gel containing the edible ionically crosslinkable polymer crosslinked with the cation described above.

The gel contains at least water and an edible and ionically crosslinkable polymer that is crosslinked with a cation, and it exhibits a behavior as an elastic solid.

In a case where the fat mass composition includes the gel, a state in which the granular bodies are appropriately spaced apart from each other is more easily maintained. Therefore, the oil and fat further hardly leaks from the granular bodies during heat cooking. Along with this, the release amount of the oil and fat in a case where the fat mass composition after heat cooking is chewed tends to be increased.

The gel preferably contains at least an edible ionically crosslinkable polymer crosslinked with a cation and water, and preferably contains other additives in addition to the edible ionically crosslinkable polymer crosslinked with a cation and water as necessary.

As the edible and ionically crosslinkable polymer crosslinked with a cation, which is contained in the gel, the above-described edible ionically crosslinkable polymer that is crosslinked with a cation is applied.
The water contained in the gel is not particularly limited as long as it is water that can be used for a food product.
Examples of the other additives contained in the gel include a seasoning, an acidulant, a bittering agent, a spice, a sweetener, an antioxidant, a coloring agent, a color developing agent, a flavoring agent, a stabilizer, and a preservative.
A content of the edible ionically crosslinkable polymer crosslinked with a cation in the gel is preferably 0.1% to 10% by mass, more preferably 0.2% to 5% by mass, and still more preferably 0.5% to 3% by mass with respect to the total mass of the gel.
A content of the other additives in the gel is preferably 0% to 20% by mass with respect to the total mass of the gel.
A ratio of the volume of the gel to the volume of the granular body is preferably 10% to 300%, more preferably 30% to 200%, and still more preferably 50% to 150%.
The volume of the gel with respect to the volume of the granular body is measured as follows.
First, a volume of a fat mass composition is measured using a laser volume meter. As the laser volume meter, it is possible to use, for example, VL-300 manufactured by KEYENCE CORPORATION.
Then, according to the procedure described in the measurement procedure for the average particle diameter of granular bodies, granular bodies are recovered from the fat mass composition and the recovered granular bodies are allowed to stand under the condition of 50°C for 1 hour to be combined, followed by being measured with a volume meter. For example, a graduated cylinder can be used as the volume meter.
The volume of the gel is obtained from the following expression.

Expression: volume of gel = [(volume of fat mass composition ($m^3$) - volume of granular body ($m^3$))/volume of fat mass composition ($m^3$)] $\times$ 100

The specific fat mass composition can be produced by a manufacturing method of a fat mass composition described later. The manufacturing method of a specific fat mass composition is not limited thereto, and the granular body containing the edible ionically crosslinkable polymer and the oil and fat may be brought into contact with a liquid containing a cation in a stainless steel vat or the like to carry out crosslinking of the edible ionically crosslinkable polymer, and then cut such that b/a is 2.00 or more.
The specific fat mass composition may be a fat lump mixture containing other fat mass compositions.
Examples of the fat lump mixture include a mixture in which the content of the specific fat mass composition described above with respect to the total mass of the fat lump mixture is 30% by mass or more.
In a case where the specific fat mass composition is used as the fat lump mixture, from the viewpoint of making the appearance of the meat substitute closer to the appearance of the chunk meat and suitably maintaining the texture of the fat mass composition, the content of the specific fat mass composition with respect to the total mass of the fat lump mixture is preferably 50% by mass or more, and more preferably 90% to 99% by mass.
In the preparation of the fat lump mixture, two or more kinds of the specific fat mass compositions may be contained.
From the viewpoint of making the appearance of the meat substitute closer to the appearance of the chunk meat and suitably maintaining the texture of the fat mass composition, the content of the fat mass composition other than the specific fat mass composition with respect to the total mass of the fat lump mixture is preferably 70% by mass or less, more preferably 50% by mass or less, and still more preferably 0.1% to 10% by mass.
The fat lump mixture may contain additives such as a seasoning, an acidulant, a bittering agent, a spice, a sweetener, an antioxidant, a coloring agent, a color former, a flavoring agent, a stabilizer, and a preservative.
The specific fat mass composition is suitably used for the meat substitute.
The meat substitute containing the specific fat mass composition contains a lean-like portion containing a protein, and the specific fat mass composition described above or a fat lump mixture containing the specific fat mass composition.

(Lean meat-like portion)

The lean meat-like portion refers to a portion corresponding to a portion that looks like lean meat in a raw meat-like meat substitute.
The lean-like portion preferably contains a protein, and as necessary, a oil and fat, a binder, and other additives.

- Protein -

The lean-like portion contains a protein.
The protein preferably contains at least one of a vegetable protein or an animal protein, and more preferably

contains a vegetable protein.

The vegetable protein is a protein collected from a plant.

The vegetable protein is not particularly limited as long as it is a protein collected from a plant. Examples of the origin of the vegetable protein include grains such as wheat, barley, oat, rice, and corn; beans such as soybean, pea, red bean, chickpea, lentil, broad bean, mung bean, and lupin; seeds such as almond, peanut, cashew nut, pistachio, hazelnut, Macadamia nut, linseed, sesame, rapeseed, cotton seed, safflower, and sunflower; tubers and roots such as potato, sweet potato, Japanese yam, Jerusalem artichoke, and cassava; vegetables such as asparagus, globe artichoke, cauliflower, broccoli, and green soybean; fruits such as banana, jackfruit, kiwifruit, coconut, avocado, and olive; mushrooms such as a mushroom, eryngii mushroom, shiitake mushroom, shimeji mushroom, and maitake mushroom; and algae such as chlorella, spirulina, euglena, laver, kelp, wakame seaweed, hijiki seaweed, agar weed, and mozuku seaweed. Among these, from the viewpoint of obtaining a meat substitute having an appearance and a food texture similar to those of the chunk meat, the origin of the edible part protein is preferably at least one selected from the group consisting of wheat, soybean, pea, and rice, and more preferably at least one selected from the group consisting of soybean and wheat.

The vegetable protein may include one kind of plant-derived protein or may contain two or more kinds of plant-derived proteins.

The animal protein is a protein that is collected from an animal.

The animal protein is not particularly limited as long as it is a protein collected from an animal. Examples of the animal protein include collagen, gelatin, keratin, fibroin, sericin, casein, conchiolin, elastin, protamine, yolk protein, and egg white protein.

Only one kind of animal protein may be contained, or two or more kinds thereof may be contained.

From the viewpoint of obtaining a meat substitute having a food texture more similar to that of livestock meat, it is preferable that the protein has a muscle-like tissue.

Here, the muscle-like tissue refers to a tissue that has a structure similar to a bundle of fibers and can be split into fibers in a certain direction.

The lean meat of the livestock meat is derived from the muscle. In addition, the muscle is composed of a bundle of muscle fibers. As a result, the lean meat of the livestock meat has a structure like a bundle of fibers. Since the protein contained in the lean-like portion of the meat substitute according to the present embodiment has a muscle-like tissue, it is possible to create a texture that is brought about by the presence of muscle fibers, which is felt in case of eating livestock meat.

Examples of the method of allowing a protein to have a muscle-like tissue include a method of subjecting a protein (as necessary, water or the like may be added together with the protein) to extrusion forming with an extruder.

By extrusion-molding the protein, it is possible to obtain a protein having a structure similar to a bundle of fibers along the extrusion direction of the extruder and having a tissue capable of being split in a fibrous shape in the extrusion direction of the extruder, that is, a protein having a muscle-like tissue.

The content of the protein is preferably 50% to 100% by mass, more preferably 60% to 95% by mass, and still more preferably 70% to 90% by mass with respect to the total mass of the lean-like portion.

The meat substitute containing the specific fat mass composition preferably contains a fiber bundled tissue-organized protein.

Here, the fiber bundled tissue-organized protein is a protein having a certain tissue in a fiber bundle shape.

In addition, the fiber bundle shape refers to a structure similar to a bundle of fibers extending in one direction.

As the fiber bundled tissue-organized protein, from the viewpoint of shape and texture, a fiber bundled tissue-organized protein having a muscle-like tissue is preferable.

Here, the muscle-like tissue refers to a tissue having a structure similar to a bundle of fibers and capable of being split in one direction.

Among these, the muscle-like tissue is preferably a tissue having a structure similar to a bundle of fibers and capable of being split in a fibrous shape in one direction.

The lean meat of the livestock meat is derived from the muscle. In addition, the muscle is composed of a bundle of muscle fibers. As a result, the lean meat of the livestock meat has a structure like a bundle of fibers. By applying the meat substitute according to the embodiment of the present disclosure to a fiber bundled tissue-organized protein having a muscle-like tissue, it is possible to obtain a meat substitute having a texture closer to livestock meat.

The fiber bundled tissue-organized protein is preferably composed of a vegetable protein.

The vegetable protein has the same meaning as described above, and the preferred aspect thereof is also the same.

The vegetable protein may include one kind of plant-derived protein or may contain two or more kinds of plant-derived proteins.

Examples of the fiber bundled tissue-organized protein having a muscle-like tissue include a spongy substance fiber bundled tissue-organized protein and a fibrous substance fiber bundled tissue-organized protein.

Here, the spongy substance refers to an isotropic porous structure in appearance.

On the other hand, the fibrous substance refers to an anisotropic fiber structure in appearance.

The isotropic porous structure indicates a structure in which a hole shape in a cut surface cut at any position is substantially an elliptical shape and is substantially the same regardless of a direction.

The anisotropic fiber structure indicates a structure in which a cut surface cut at any position is fibrous. Preferably, the hole shape is present, and the hole shape has a structure different from a substantially elliptical shape or a substantially fibrous shape depending on a cutting direction.

Examples of a method of observing the cut surface include a method of cutting out a section and observing the section with a microscope and a method of observing the section with X-ray computed tomography (CT).

The meat substitute containing the specific fat mass composition preferably contains a fiber bundled tissue-organized protein in which a fiber axial direction of the fiber bundled tissue-organized protein is aligned in one direction in a near region.

Here, the fiber axial direction of the fiber bundled tissue-organized protein means a direction of a longitudinal direction of a fiber forming a muscle-like tissue.

In addition, the fact that the fiber axial direction of the fiber bundled tissue-organized protein is aligned in one direction in the near region may include a part of the tissue-organized protein having a different fiber axial direction, but the fiber axial direction of the tissue-organized protein may be aligned in a certain direction as a whole, or may be aligned in one direction in the near region while having fluctuations as a whole.

The tissue-organized protein of the spongy substance having an isotropic porous structure is also a fiber bundled tissue-organized protein by a method of loosening the protein in a fibrous form or a method of cutting the protein in a fibrous form.

From the viewpoint of appearance and texture, the fiber bundled tissue-organized protein contained in the meat substitute is more preferably a fibrous fiber bundled tissue-organized protein.

A content of the fiber bundled tissue-organized protein is preferably 5% to 95% by mass, more preferably 7% to 90% by mass, and still more preferably 10% to 85% by mass with respect to the total mass of the meat substitute.

- Oil and fat -

The lean meat-like portion may contain an oil and fat.

Examples of the oil and fat include a vegetable oil and fat and an animal oil and fat.

Examples of the vegetable oil and fat include the same ones as those described in the description of the fat mass composition.

Examples of the animal oil and fat include beef tallow, pork lard, whale oil, and fish oil.

- Binder -

It is preferable that the lean-like portion contains a binder as necessary.

In a case where the lean-like portion contains a binder, the lean-like portion is likely to maintain a single integrated shape.

The binder is not particularly limited as long as it is edible and can maintain the shape of the lean meat-like portion.

Examples of the binder include a protein, thickening polysaccharides, and starch.

The protein that is used as the binder may be the same or different from the protein contained in the lean meat-like portion.

Examples of the protein that is used as the binder include a vegetable protein, an animal protein, and an enzyme.

Examples of the vegetable protein that is used as the binder include a protein of which the origin is wheat, soybean, rice, or the like.

Examples of the animal protein that is used as the binder include a milk protein and an egg white protein.

Examples of the enzyme include transglutaminase.

Examples of the thickening polysaccharides include carrageenan, xanthan gum, pectin, locust bean gum, curdlan, guar gum, tragacanth gum, Arabic gum, gellan gum, tamarind seed gum, cassia gum, tara gum, alginic acid, agar, glucomannan, soybean polysaccharide, gelatin, pullulan, psyllium, chitosan, methyl cellulose, hydroxypropyl methyl cellulose, hydroxyethyl cellulose, carboxymethyl cellulose, and dextrin.

Examples of the starch include wheat starch, cassava starch, rice starch, glutinous rice starch, corn starch, waxy corn starch, sago starch, potato starch, arrowroot starch, lotus root starch, mung bean starch, sweet potato starch, waxy potato starch, waxy cassava starch, and waxy wheat starch.

The binder preferably includes polysaccharides including thermally non-reversible gel-forming polysaccharides and thermally reversible gel-forming polysaccharides, and a gelation retarder.

-Thermally non-reversible gel-forming polysaccharides-

Here, the thermally non-reversible gel is a gel (in this paragraph, the "gel" refers to a gel that contains at least water and thermally non-reversible gel-forming polysaccharides and exhibits a behavior as an elastic solid.) that maintains a gel state even in a case of being heated once the gel is formed.

The thermally irreversible gel-forming polysaccharides are polysaccharides which form the thermally irreversible gel.

From the viewpoint of solubility before gelation, the thermally non-reversible gel-forming polysaccharides are preferably polysaccharides that are crosslinked by a reaction with a cation.

The cation as a gelation agent is preferably a metal ion having an ion valence of divalent or higher.

Examples of the metal ion include divalent metal ions such as a calcium ion, a magnesium ion, an iron ion (II), a copper ion (II), a zinc ion, and a manganese ion; and trivalent metal ions such as an aluminum ion and an iron ion (III).

From the viewpoint of obtaining a stable crosslinking structure, the metal ion is preferably at least one selected from a calcium ion, a magnesium ion, or a zinc ion, and more preferably a calcium ion.

Examples of the thermally non-reversible gel-forming polysaccharides include polysaccharides having at least one selected from the group consisting of a carboxy group, a carboxylate anion group ($-COO^-$), a sulfo group, and a sulfonate anion group ($-SO_3^-$).

Examples of the thermally non-reversible gel-forming polysaccharides include alginic acid, LM pectin, and LA gellan gum.

From the viewpoint of improving moldability and heat resistance of the gel, the thermally non-reversible gel-forming polysaccharides are preferably at least one selected from the group consisting of alginic acid and pectin.

A viscosity of a 1% by mass aqueous solution of the thermally non-reversible gel-forming polysaccharides (aqueous solution containing 1% by mass of the thermally non-reversible gel-forming polysaccharides with respect to the entire aqueous solution) is preferably 10 mPa·s or more and 3,000 mPa·s or less, and more preferably 20 mPa·s or more and 1,000 mPa·s or less.

The viscosity of the 1% by mass aqueous solution of the thermally non-reversible gel-forming polysaccharides is a value measured with a tuning fork vibration type viscometer under a temperature condition of 20°C.

As the tuning fork vibration type viscometer, for example, SV-10 (manufactured by A&D Company, Limited) can be used.

A content of the thermally non-reversible gel-forming polysaccharides is preferably 10% to 90% by mass, more preferably 20% to 80% by mass, and still more preferably 30% to 70% by mass with respect to the total mass of the binder.

-Thermally reversible gel-forming polysaccharides-

Here, a thermoreversible gel is a gel that maintains a gel state (in this paragraph, "gel" refers to a substance that contains at least water and a thermoreversible gel-forming polysaccharide and behaves as an elastic solid) at a normal temperature (25°C) and melts and becomes liquid (sol) in case of being heated.

The thermally reversible gel-forming polysaccharides are polysaccharides which form a thermal reversible gel.

Examples of the thermally reversible gel-forming polysaccharides include agar, carrageenan, fucellulan, native gellan gum, locust bean gum, xanthan gum, guar gum, psyllium seed gum, glucosaminoglycan, tara gum, and tamarind seed gum.

From the viewpoint of maintaining the shape of the meat substitute after heating and cooking and the texture, the thermally reversible gel-forming polysaccharides are preferably carrageenan.

A content of the thermally reversible gel-forming polysaccharides is preferably 10% by mass or more and 90% by mass or less, more preferably 20% by mass or more and 80% by mass or less, and still more preferably 30% by mass or more and 70% by mass or less with respect to the entire binder.

--Combination of thermally non-reversible gel-forming polysaccharides and thermally reversible gel-forming polysaccharides--

Examples of a preferred combination of the thermally non-reversible gel-forming polysaccharides and the thermally reversible gel-forming polysaccharides include a combination in which the thermally non-reversible gel-forming polysaccharides are at least one selected from the group consisting of alginic acid and pectin, and the thermally reversible gel-forming polysaccharides are carrageenan.

-Gelation retarder-

The binder preferably contains a gelation retarder.

The gelation retardant is a compound which has an action of inhibiting gelation of the thermally irreversible gel-forming polysaccharides or the thermally reversible gel-forming polysaccharides.
From the viewpoint of maintaining the shape of the meat substitute after heating and cooking and the texture, the gelation retarder is preferably a compound having a function of suppressing gelation of the thermally non-reversible gel-forming polysaccharides.
From the viewpoint of maintaining the shape of the meat substitute after heating and cooking and the texture, the gelation retarder is preferably a chelating agent.
As the chelating agent, a known chelating agent can be suitably used.
Examples of the chelating agent include an oxycarboxylic acid such as tartaric acid, citric acid, a gluconic acid; an aminocarboxylic acid such as iminodiacetic acid (IDA), nitrilotriacetic acid (NTA), and ethylenediaminetetraacetic acid (EDTA); a condensed phosphoric acid such as pyrophosphoric acid and tripolyphosphoric acid; and a salt thereof.
Among these, from the viewpoint of maintaining the shape of the meat substitute after heating and cooking and the texture, and the viewpoint of the flavor of the meat substitute, the chelating agent is preferably a condensed phosphoric acid or a salt thereof, and more preferably pyrolytic acid or a pyrolytic acid salt.
A content of the gelation retarder is preferably 0.1% to 20% by mass, more preferably 0.5% to 15% by mass, and still more preferably 0.3% to 10% by mass with respect to the total mass of the polysaccharides including the thermally non-reversible gel-forming polysaccharides and the thermally reversible gel-forming polysaccharides.
A content of the binder contained in the lean-like portion is preferably 0.01% to 10% by mass with respect to the total mass of the lean-like portion.

-Other additives-

The lean-like portion preferably contains other additives other than the protein, the oil and fat, and the binder, as necessary.
Examples of other additives include water, a seasoning, an acidulant, a bittering agent, a spice, a sweetener, an antioxidant, a coloring agent, a color developing agent, a flavoring agent, a stabilizer, and a preservative.
A content of the other additives is preferably 0% to 20% by mass with respect to the total mass of the lean-like portion.

(Fat mass composition or fat mass mixture)

From the viewpoint of making the appearance of the meat substitute closer to the appearance of the chunk meat, a content of the specific fat mass composition or the fat lump mixture including the specific fat mass composition is preferably 3% by mass or more, more preferably 5% by mass or more, and still more preferably 7% to 50% by mass with respect to the total mass of the meat substitute.

<Manufacturing method for fat mass composition>

The manufacturing method of the specific fat mass composition described above is not particularly limited, but it is preferable that the specific fat mass composition is manufactured by the following manufacturing method of a fat mass composition (also referred to as a manufacturing method according to the present disclosure).
The manufacturing method of a fat mass composition according to the present disclosure includes (1) a step of forming a liquid droplet containing an oil and fat in an aqueous solution (liquid droplet forming step), (2) a step of solidifying the oil and fat in the liquid droplet to obtain a particle containing the solidified oil and fat (oil and fat solidification step), (3) a step of adding an aqueous solution containing an edible ionically crosslinkable polymer to the particle to obtain a crude fat mass forming mixture (mixing step), (4) a step of bringing the crude fat mass forming mixture into contact with a liquid containing a cation to produce a fat mass composition precursor (hereinafter, also referred to as a "precursor production step"), (5) a step of molding the fat mass composition precursor (hereinafter, also referred to as a "shaping step"), and (6) a step of dropwise adding the molded fat mass composition precursor to a curing liquid containing a cation to obtain a fat mass composition (hereinafter, also referred to as a "crosslinking step").
The manufacturing method according to the present disclosure preferably further includes (7) a step of immersing the obtained fat mass composition in a monovalent cation-containing aqueous salt solution to adjust a swelling degree (swelling degree adjustment step).
Hereinafter, each step in the manufacturing method of a fat mass composition according to the present disclosure will be described.

- (1) Liquid droplet forming step -

(1) The liquid droplet forming step is a step of forming a liquid droplet containing an oil and fat in an aqueous solution, and as the oil and fat, at least the oil and fat described above having a melting point of 0.1°C or higher is used. Since the oil and fat having a melting point of 0.1°C or higher has been described above, the description thereof will be omitted here.

As the aqueous solution, that is, the water phase, an aqueous solution containing water as a solvent and a surfactant is preferable.

The oil and fat is dropwise added to the aqueous solution to form a liquid droplet, that is, an emulsion, using the water phase as a continuous phase and the oil phase containing the oil and fat as a dispersed phase.

Examples of a method of forming a liquid droplet containing an oil and fat in an aqueous solution include a method of dispersing an oil and fat in an aqueous solution.

The method of dispersing an oil and fat in an aqueous solution is preferably a method of emulsifying an aqueous solution and an oil and fat using an emulsification machine.

Examples of the emulsification machine include a rotary stirrer equipped with a stirring blade of a propeller type, an anchor type, a paddle type, or a turbine type, a stationary mixer such as a static mixer, a rotor/stator type emulsification machine such as a homogenizer or CLEARMIX, a high-pressure emulsification machine such as a mill type emulsification machine having a grinding function or a Manton Gaulin type pressure emulsification machine, a high-pressure nozzle type emulsification machine that generates cavitation under high pressure, a high-pressure collision type emulsification machine such as a microfluidizer, which applies shear force by colliding liquids with each other under high pressure, an ultrasonic emulsification machine that generates cavitation with an ultrasonic wave, and a membrane emulsification machine that carries out uniform emulsification through pores.

From the viewpoint of improving the evenness of the particle diameter of the liquid droplet containing an oil and fat, it is preferable to use a membrane emulsification machine as the emulsification machine.

In a case of carrying out emulsification using a membrane emulsification machine, the emulsification method may be any one of a direct membrane emulsification method or a permeable membrane emulsification method; however, it is preferably a direct membrane emulsification method.

As the porous membrane provided in the membrane emulsification machine, for example, a Shirasu Porous Glass (SPG) membrane is suitable, and can be purchased from, for example, SPG Technology Co., Ltd.

The emulsification method that uses a membrane emulsification machine is, for example, preferably a method in which an oil and fat is dispersed through a porous membrane in an aqueous solution containing water and a surfactant.

A mass ratio (aqueous solution/oil and fat) of the aqueous solution used for the emulsification to the oil and fat is preferably 10/1 to 2/1.

- (2) Oil and fat solidification step -

The (2) oil and fat solidification step is a step of solidifying the oil and fat in the liquid droplet to obtain a particle containing the solidified oil and fat.

(1) The liquid droplet dispersion liquid obtained in the liquid droplet forming step is allowed to stand, and is separated into a phase containing the liquid droplet containing an oil and fat and a water phase, the water phase is discharged from a separating funnel, and the phase containing the liquid droplet containing an oil and fat (that is, an oil phase) is recovered.

The recovered oil phase containing the liquid droplet containing an oil and fat is cooled to a temperature equal to or lower than the melting point of the oil and fat, for example, 5°C, and is allowed to stand for about 12 hours to solidify the oil and fat. The cooling can be carried out, for example, in a constant temperature chamber such as a refrigerator.

In this way, an aqueous solution containing a solidified particle-like oil and fat is obtained. The aqueous solution containing the solidified particle-like oil and fat is also referred to as a particle-containing liquid below.

Examples of the method of solidifying an oil and fat in liquid droplets to obtain particles containing the solidified oil and fat include a method of carrying out curing using an oil curing agent and a method of cooling liquid droplets containing an oil and fat. However, from the viewpoint of obtaining a fat mass composition having a large release amount of an oily component in a case of being chewed, a method of cooling liquid droplets containing an oil and fat is preferable.

Examples of a method of cooling the liquid droplet containing an oil and fat include (1) a method of cooling an aqueous solution containing a liquid droplet containing an oil and fat, which is obtained by a step of forming a liquid droplet

containing an oil and fat in an aqueous solution, using a refrigerator or the like.

The cooling temperature is preferably higher than 0°C and equal to or lower than the melting point of the oil and fat.

The cooling time is not particularly limited, and it is preferable to carry out the cooling until the oil and fat contained in the liquid droplet is solidified.

After the cooling, the particles containing the solidified oil and fat may be collected in the supernatant of the solution, and in this case, it is preferable to recover the supernatant containing the particles. Then, it is preferable to carry out the following crosslinking step using the recovered supernatant containing the particles.

Examples of a method of recovering the supernatant containing the particles include a method of discharging an aqueous solution other than the supernatant containing the particles using a separating funnel.

The content of the oil and fat in the aqueous solution containing the particles obtained by the oil and fat solidification step is preferably 40% to 90% by mass with respect to the total mass of the solution.

- (3) Mixing step -

The (3) mixing step is a step of adding an aqueous solution containing an edible ionically crosslinkable polymer to the particle-containing liquid containing the solidified particle-like oil and fat obtained in the step (2) to obtain a crude fat mass forming mixture.

The aqueous solution containing the edible ionically crosslinkable polymer (hereinafter, also referred to as an ionically crosslinkable polymer solution) is prepared in advance. The ionically crosslinkable polymer solution contains at least the edible ionically crosslinkable polymer, the surfactant, and water described above.

By adding the particle-containing liquid containing the solidified particle-like oil and fat obtained in the step (2) to the ionically crosslinkable polymer solution and mixing the mixture, a liquid (hereinafter, also referred to as a specific liquid A) containing a granular body containing the edible ionically crosslinkable polymer and the oil and fat is obtained.

By mixing the particles obtained by the oil and fat solidification step and the aqueous solution containing the edible ionically crosslinkable polymer, a liquid containing a granular body containing the edible ionically crosslinkable polymer and the oil and fat can be obtained.

From the viewpoint of making the appearance of the meat substitute closer to the appearance of the chunk meat, the viscosity of the specific liquid A is preferably 30 mPa·s to 3,000 mPa·s and more preferably 50 mPa·s to 2,000 mPa·s.

The viscosity of the specific liquid A is a value measured with a tuning fork vibration type viscometer under a temperature condition of 20°C.

As the tuning fork vibration type viscometer, for example, SV-10 (manufactured by A&D Company, Limited) can be used.

From the viewpoint of food hygiene, the viewpoint of liquid physical properties, and the like, the temperature of the specific liquid A is preferably 5°C to 20°C.

From the viewpoint of food hygiene, the viewpoint of liquid physical properties, and the like, the temperature of the specific liquid B is preferably 5°C to 20°C.

- (4) Precursor Production Step -

(4) The precursor production step is a step of bringing the crude fat mass forming mixture into contact with the liquid containing a cation to produce a fat mass composition precursor.

The fat mass composition precursor is a composition in which the cross-linking polymer contained in the crude fat mass forming mixture reacts with the cation, and a certain degree of cross-linking proceeds.

- (5) Shaping Step -

(5) The shaping step is a step of molding the fat mass composition precursor obtained in the step (4) into a predetermined shape. Since the fat mass precursor has a certain degree of hardness in the step (4), the fat mass precursor can be molded into a target shape of the fat mass composition. The molding can be performed using a known device according to the purpose.

The step (4) and the step (5) do not necessarily have to be performed in this order, and for example, the production of the fat mass composition precursor and the shaping can be performed at the same time, and the fat mass composition precursor obtained by shaping can be obtained by bringing the shaped crude fat mass forming mixture into contact with the liquid containing a cation while molding the molded element mixture for forming a fat mass.

- (6) Crosslinking step -

(6) The crosslinking step is a step of adding dropwise the molded fat mass composition precursor obtained in the step (4) and the step (5) to a curing liquid containing a cation to obtain a fat mass composition.

A fat mass composition precursor is produced by contacting the mixture with a liquid (hereinafter also referred to as specific liquid B) containing cations to promote crosslinking and solidify the ionically crosslinkable polymer. In the step (6), the crosslinking of the components in the fat mass composition precursor obtained in the step (4) and the step (5) proceeds, and the fat mass composition precursor is more reliably molded, whereby the fat mass composition is obtained.

The edible ionically crosslinkable polymer, the granular body containing oil and fat having a melting point of 0.1°C or lower, and the surfactant which is a preferred additive, which are used in the manufacturing method according to the present disclosure, are the same as the respective components in the specific fat mass composition described above, and the preferred aspects thereof are also the same.

It is preferable that the manufacturing method according to the present disclosure further includes (7) a step of immersing the obtained fat mass composition in a monovalent cation-containing aqueous salt solution to adjust the swelling degree (swelling degree adjustment step).

-(7) Swelling Degree Adjustment Step-

(7) The swelling degree adjustment step is a step of immersing the fat mass composition obtained through the steps (1) to (6) in a monovalent cation-containing aqueous salt solution (hereinafter, also referred to as a swelling degree adjusting liquid) to improve the crosslinking properties of the ionically crosslinkable polymer contained in the fat mass composition, thereby adjusting the swelling degree of the fat mass composition to a preferred range.

The swelling degree adjusting liquid is an aqueous solution of a salt capable of forming a monovalent cation, and contains an edible salt capable of forming a monovalent cation.

Examples of the salt capable of forming a monovalent cation include sodium glutamate, potassium glutamate, trisodium citrate, disodium hydrogen citrate, sodium dihydrogen citrate, sodium L-aspartate, disodium 5'-inosinate, disodium 5'-uridylate, table salt (sodium chloride), trisodium phosphate, potassium gluconate, potassium chloride, tripotassium phosphate, dipotassium hydrogen phosphate, sodium lactate, and potassium lactate. From the viewpoint that the swelling degree adjusting effect is favorable and the swelling degree adjusting liquid does not have an undesired influence on the texture, palatability, and the like of the fat mass composition, sodium glutamate, potassium glutamate, and the like are preferable.

The content of the salt in the swelling degree adjusting liquid is appropriately adjusted depending on the target swelling degree, and can be set to 0.5% to 20% by mass, preferably in a range of 1% to 10% by mass. In general, the higher the concentration of the swelling degree adjusting liquid, the lower the swelling degree tends to be.

The time for immersing the fat mass composition in the swelling degree adjusting liquid is appropriately adjusted depending on the target swelling degree, and can be set to 1 minute to 1,500 minutes, preferably in a range of 5 minutes to 360 minutes. In general, the longer the time for immersing the fat mass composition in the swelling degree adjusting liquid, the lower the swelling degree tends to be.

From the viewpoint of food hygiene, the viewpoint of liquid physical properties, and the like, the temperature of the swelling degree adjusting liquid is preferably 5°C to 20°C.

According to the manufacturing method of the present disclosure, it is possible to manufacture a fat mass composition which is similar in appearance to beef tallow and in which the expression of a crispy texture is suppressed, and which makes it possible to manufacture a meat substitute having an appearance similar to chunk meat. The reason therefor is presumed as follows.

In the manufacturing method of the fat mass composition, the shaping is carried out after the contact between the specific liquid A and the specific liquid B. The contact between the specific liquid A and the specific liquid B initiates the crosslinking of the edible ionically crosslinkable polymer in the specific liquid A, and the crosslinked edible ionically crosslinkable polymer is shaped, whereby the cross section of the manufactured fat mass composition has an elongated shape. Therefore, the meat substitute obtained by using this fat mass composition has an appearance similar to chunk meat.

By mixing the particles obtained by the oil and fat solidification step and the aqueous solution containing the edible ionically crosslinkable polymer, a liquid containing a granular body containing the edible ionically crosslinkable polymer and the oil and fat can be obtained.

From the viewpoint of making the appearance of the meat substitute closer to the appearance of the chunk meat, the viscosity of the specific liquid A is preferably 30 mPa·s to 3,000 mPa·s and more preferably 50 mPa·s to 2,000 mPa·s.

The viscosity of the specific liquid A is a value measured with a tuning fork vibration type viscometer under a temperature condition of 20°C.

As the tuning fork vibration type viscometer, for example, SV-10 (manufactured by A&D Company, Limited) can

be used.

From the viewpoint of food hygiene, the viewpoint of liquid physical properties, and the like, the temperature of the specific liquid A is preferably 5°C to 20°C.

From the viewpoint of food hygiene, the viewpoint of liquid physical properties, and the like, the temperature of the specific liquid B is preferably 5°C to 20°C.

(Production step of fat mass composition precursor)

In the manufacturing method according to the present disclosure, the fat mass composition precursor means a fat mass composition before being molded.

By bringing the specific liquid A and the specific liquid B into contact with each other, a part or the entirety of the edible ionically crosslinkable polymer can be crosslinked. From the viewpoint of ease of molding, it is preferable that a part of the edible ionically crosslinkable polymer is crosslinked at a timing of starting the molding of the fat mass composition precursor.

The addition amount of the specific liquid B is preferably 50 parts by mass to 200 parts by mass with respect to 100 parts by mass of the addition amount of the specific liquid A.

Examples of the specific liquid B include an aqueous solution in which a salt containing a cation is dissolved. Examples of the salt containing a cation include calcium chloride, calcium gluconate, and calcium lactate.

The content of the salt in the aqueous solution in which the salt containing a cation is dissolved is preferably 0.5% to 5% by mass with respect to the total mass of the aqueous solution.

The content of the edible ionically crosslinkable polymer is preferably 0.5% to 5.0% by mass with respect to the total mass of the specific liquid A.

The content of the granular body containing oil and fat is preferably 10% to 70% by mass with respect to the total mass of the liquid containing the specific liquid A.

The specific liquid A is prepared by a method including the above-described (1) liquid droplet forming step, the above-described (2) oil and fat solidification step, and the above-described (3) mixing step.

The specific liquid A and the specific liquid B are not limited to those prepared by the above-described method, and commercially available products may be used.

The time from the contact between the specific liquid A and the specific liquid B to the start of the molding of the fat mass composition precursor is preferably 1 minute or less, and more preferably 0.01 seconds to 10 seconds. As a result, the molding can be performed before the crosslinking of the edible ionically crosslinkable polymer is completely progressed, and the appearance of the meat substitute formed of the fat mass composition to be produced can be made closer to the appearance of the chunk meat.

The method of molding the fat mass composition precursor is not particularly limited, and from the viewpoint of productivity, it is preferable that the fat mass composition precursor is molded by pressurizing the fat mass composition precursor with a shaping member and a support member.

The shapes of the shaping member and the support member are not particularly limited, and may be a roller shape or a plate shape. The plate-shaped shaping member and support member include those provided with a moving mechanism such as a belt conveyor.

The materials of the shaping member and the support member are not particularly limited, and examples thereof include stainless steel, silicone rubber, and vinylidene fluoride rubber (FKM) from the viewpoint of food hygiene.

From the viewpoint of productivity, the shaping member is preferably a shaping roller disposed to face the support member. The fat mass composition precursor is molded in a case of passing between the shaping roller and the support member.

The shaping roller can have a shaping portion including a protruding portion. As a result, the fat mass composition precursor is molded, and the cross section of the specific fat mass composition to be produced has an elongated shape. Therefore, the meat substitute obtained by using the specific fat mass composition has an appearance similar to chunk meat.

The number of protruding portions included in the shaping portion may be one or two or more, but from the viewpoint of making the appearance of the meat substitute closer to the appearance of the chunk meat, it is preferably two or more and more preferably 3 to 200 per one shaping portion.

In addition, the shaping roller may have one shaping portion or two or more shaping portions.

Specific examples of the shaping roller having two or more shaping portions include a shaping roller having a singulation unit and a shaping portion, which will be described later, alternately.

In a case where the shaping member is a shaping roller having a shaping portion including a protruding portion, from the viewpoint of making the appearance of the meat substitute closer to the appearance of the chunk meat, the minimum distance between the protruding portion and the support member is preferably 0.1 mm to 1.0 mm and more preferably 0.1 mm to 0.8 mm.

The shape of the protruding portion in the shaping member is not particularly limited, and may extend in one direction (for example, a direction perpendicular to a tangent line of the outer periphery of the shaping roller). Specifically, the protruding portion can have a triangular prism shape, a semicircular sleeve shape, a columnar shape having a trapezoidal cross section, or the like.

In a case where the shaping portion includes two or more protruding portions extending in one direction, from the viewpoint of making the appearance of the meat substitute closer to the appearance of the chunk meat, the interval between the adjacent protruding portions is preferably 10.0 mm or less, more preferably 8.0 mm or less, and still more preferably 5.0 mm or less. From the viewpoint of improving the strength of the fat mass composition, the interval between the adjacent protruding portions is preferably 0.5 mm or more, more preferably 1.0 mm or more, and still more preferably 3.0 mm or more. From the viewpoint of making the appearance of the meat substitute closer to the appearance of the chunk meat and the viewpoint of improving the strength of the fat mass composition, the interval between the adjacent protruding portions is preferably 0.5 mm to 10.0 mm.

In the present disclosure, the interval between the adjacent protruding portions means a distance between the positions of the protruding portions having the minimum distance from the support member. In other words, it means a distance between the vertices of the protruding portions. In a case where the vertex of the protruding portion is a plane, the distance between the vertices is set as the interval between the adjacent protruding portions.

The shaping roller can include a singulation unit.

In a case where the shaping roller includes the singulation unit, the fat mass composition precursor or the fat mass composition after shaping can be cut (singulated) into a desired size.

From the viewpoint of ease of cutting, the minimum distance between the singulation unit and the support member is preferably 0.5 mm or less, more preferably 0.3 mm or less, and still more preferably 0.1 mm or less, and may be 0 mm.

The shape of the singulation unit is not particularly limited, and can be a shape extending in a tangential direction of the outer periphery of the shaping roller and a direction perpendicular to the tangential direction. Specifically, the singulation unit can have a cubic shape, a cured fish paste type shape, or the like.

In a case where the singulation unit has a cubic shape, from the viewpoint of ease of cutting, the length of the singulation unit in the tangential direction of the outer periphery of the shaping roller is preferably 1.0 mm or more, more preferably 5.0 mm or more, and still more preferably 10.0 mm or more. From the viewpoint of making the appearance of the meat substitute closer to the appearance of the chunk meat, the length of the singulation unit in the tangential direction of the outer periphery of the shaping roller is preferably 200.0 mm or less. From the viewpoint of ease of cutting, the viewpoint of making the appearance of the meat substitute closer to the appearance of the chunk meat, and the like, the length of the singulation unit in the tangential direction of the outer periphery of the shaping roller is preferably 1.0 mm to 200.0 mm.

The shaping roller may include two or more singulation units. In a case where the shaping roller includes two or more singulation units, it is preferable that the interval between the adjacent singulation units is appropriately adjusted, and for example, the interval is preferably 10.0 mm to 100.0 mm and more preferably 13.0 mm to 70.0 mm.

In the present disclosure, the interval between the adjacent singulation units means a distance between the positions of the singulation units at which the distance to the support member is minimized. In other words, it means a distance between the vertices of the singulation units. In a case where the vertex of the singulation unit is a plane, the distance between the vertices is set as the interval between the adjacent singulation units at which the distance is minimized.

In a case where the shaping of the fat mass composition precursor is performed by pressurizing the fat mass composition precursor with the shaping roller and the support member, the contact between the liquid (specific liquid A) containing the granular body containing the edible ionically crosslinkable polymer and the oil and fat and the liquid (specific liquid B) containing the cation can be performed by supplying the specific liquid A to the shaping roller or the support member on which the specific liquid B is present on the surface, and then supplying the specific liquid B.

In a case where the contact between the specific liquid A and the specific liquid B is performed by the above-described method, from the viewpoint of making the appearance of the meat substitute closer to the appearance of the chunk meat, the ratio of the rotation speed (mm/sec) or the moving speed (mm/sec) of the shaping roller or the support member to the supply speed (mm/sec) of the specific liquid A (the rotation speed (mm/sec) or the moving speed (mm/sec) of the shaping roller or the support member/the supply speed of the specific liquid A) is preferably 1.00 or more, more preferably 1.50 or more, and still more preferably 2.00 or more. From the viewpoint of making the appearance of the meat substitute closer to the appearance of the chunk meat, the ratio of the speed is preferably 20.00 or less. From the viewpoint of making the appearance of the meat substitute closer to the appearance of the chunk meat, the ratio of the speed is preferably 1.00 to 20.00.

The supply speed of the specific liquid A is calculated by dividing the jet flow rate of the specific liquid A by the distal end cross-sectional area of the nozzle that jets the specific liquid A.

In addition, the rotation speed of the shaping roller or the support member refers to the speed of the roll surface, and is calculated from the numerical value obtained by measuring the rotation speed using a noncontact rotation system

(for example, a hand tachometer manufactured by rineco inc.) and the roll diameter.

In addition, the moving speed of the shaping roller or the support member is measured by an incremental measurement wheel encoder (for example, DFV60 manufactured by SICK AG).

From the viewpoint of productivity, the viewpoint of making the appearance of the meat substitute closer to the appearance of the chunk meat, and the like, the supply speed of the specific liquid A is preferably 40.0 mm/sec to 120.0 mm/sec, and more preferably 60.0 mm/sec to 100.0 mm/sec.

From the viewpoint of productivity, the viewpoint of making the appearance of the meat substitute closer to the appearance of the chunk meat, and the like, the rotation speed of the shaping roller is preferably 50.0 mm/sec to 400.0 mm/sec, more preferably 80.0 mm/sec to 360.0 mm/sec, and still more preferably 150.0 mm/sec to 200.0 mm/sec.

In a case where the shaping of the fat mass composition precursor is performed by pressurizing the fat mass composition precursor by the shaping roller and the support member, the contact between the specific liquid A and the specific liquid B can be performed by immersing the shaping roller and the support member in the tank filled with the specific liquid B and supplying the specific liquid A to the shaping roller or the support member.

The specific liquid A may be brought into contact with the specific liquid B by being supplied onto the specific liquid B present on the surface of the shaping roller or the support member.

In addition, the specific liquid A may be brought into contact with the specific liquid B by being supplied to one surface of the shaping roller and the support member in which the specific liquid B is not present and being brought into contact with the specific liquid B present on the other surface before the shaping.

It is preferable that the shaping roller and the support member are immersed in the specific liquid B such that a part of the shaping roller and the support member is exposed, and thus a region for supplying the specific liquid A can be provided.

The fat mass composition obtained by the shaping may be washed with tap water or the like. In addition, after the washing, the fat mass composition may be frozen using a freezer or the like.

After the production of the fat mass composition and before the production of the next fat mass composition, the fat mass composition adhering to the shaping roller and the support member may be removed. The method for removing the fat mass composition is not particularly limited, and the fat mass composition can be removed by washing using water, the specific liquid B, a gas, or the like. By removing the fat mass composition, the fat mass composition precursor can be satisfactorily shaped, and the fat mass composition can be continuously produced.

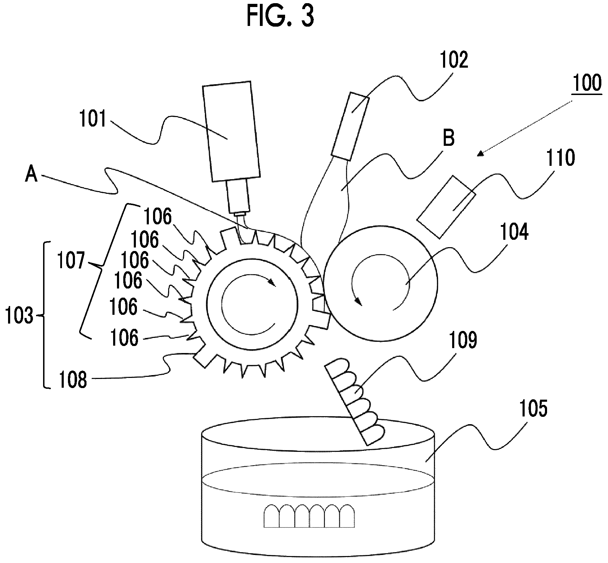

Next, an embodiment of the manufacturing method of a fat mass composition according to the present disclosure will be described with reference to FIG. 3. The manufacturing method of a fat mass composition according to the present disclosure is not limited to the following method.

FIG. 3 is a schematic cross-sectional view showing an embodiment of a production apparatus for a fat mass composition (hereinafter, also simply referred to as a production apparatus).

A production apparatus 100 includes a supply unit 101 (hereinafter, also simply referred to as a supply unit 101) of a liquid (specific liquid A) containing a granular body containing an edible ionically crosslinkable polymer and an oil and fat, a supply unit 102 (hereinafter, also simply referred to as a supply unit 102) of a liquid (specific liquid B) containing a cation, a roller-shaped shaping member (shaping roller) 103, and a roller-shaped support member (support roller) 104.

The production apparatus 100 may include a bathtub 105.

As shown in FIG. 3, the shaping roller 103 has three shaping portions 107 including six protruding portions 106 and three singulation units 108 alternately.

Since the shaping roller has the shaping portion including the protruding portion, the fat mass composition precursor is shaped, and the cross section of the specific fat mass composition to be produced has an elongated shape. Therefore, the meat substitute obtained by using the specific fat mass composition has an appearance similar to chunk meat.

Each of the protruding portions 106 extends in a direction perpendicular to a tangent line of the outer periphery of the shaping roller 103.

Each of the singulation units 108 extends in a tangential direction of the outer periphery of the shaping roller 103 and in a direction perpendicular to the tangential direction.

First, the specific liquid B is supplied from the supply unit 102 to the surface of the shaping roller 103.

Next, the specific liquid A (in FIG. 3, indicated by reference numeral A) is supplied from the supply unit 101 to the surface of the shaping roller 103 to which the specific liquid B has been supplied.

Next, the specific liquid B (in FIG. 3, indicated by reference numeral B) is supplied from the supply unit 102 to the surface of the shaping roller 103 to which the specific liquid A has been supplied.

On the surface of the shaping roller 103, the edible ionically crosslinkable polymer contained in the supplied specific liquid A is crosslinked by the cation contained in the specific liquid B, and the fat mass composition precursor is produced.

Next, the fat mass composition precursor is pressurized and shaped by the shaping portion 107 of the shaping roller 103 and the support roller 104, and then is singulated into a desired size by the singulation unit 108 of the shaping

roller 103 to obtain a fat mass composition 109.

The obtained fat mass composition 109 is put into the bathtub 105 and is washed with water or the like.

In one embodiment, the production apparatus 100 may include a washing section 110. The fat mass composition adhering to the shaping roller 103 or the support roller 104 can be removed by the washing section 110. FIG. 3 shows the washing section 110 for removing the fat mass composition adhering to the support roller 104, but the present invention is not limited thereto, and the production apparatus 100 may include a washing section for removing the fat mass composition adhering to the shaping roller 103. The washing section is not particularly limited as long as it can supply water, the specific liquid B, a gas, or the like, and examples thereof include a nozzle capable of supplying these.

The supply unit of the specific liquid A may have a nozzle. The cross-sectional shape of the nozzle is not particularly limited and can be appropriately adjusted. From the viewpoint of making the appearance of the meat substitute closer to the appearance of the chunk meat, the cross-sectional shape of the nozzle is preferably an elliptical shape, a rectangular shape, a semicircular shape, or a rhombic shape. In a case where the nozzle shape is a rectangular shape, the aspect ratio (length of long side/length of short side) is preferably 3 to 50 and more preferably 4 to 40.

The meat substitute containing the specific fat mass composition preferably contains a lean-like portion containing a protein and a fat lump mixture containing a fat mass composition produced by the manufacturing method of the fat mass composition or a fat mass composition other than the fat mass composition produced by the manufacturing method of the fat mass composition.

The lean-like portion is as described above, and thus the description thereof will be omitted here.

The meat substitute can be obtained, for example, by a manufacturing method including a first step of mixing the lean-like portion precursor with the specific fat mass composition or the fat lump mixture containing the specific fat mass composition to obtain a first mixture, and a second step of stretching the first mixture.

Hereinafter, an embodiment of the manufacturing method of the meat substitute will be described, but the manufacturing method is not limited to the following description.

(First step)

A method of mixing the lean-like portion precursor with the specific fat mass composition or the fat lump mixture containing the specific fat mass composition is not particularly limited, and examples thereof include a method of mixing by hand and a method of using a known mixer.

Examples of the mixer include a mixer, and the attachment preferably has a structure for scraping off the adhesion on the wall surface.

The lean-like portion precursor can be obtained by mixing a fiber bundled tissue-organized protein with a binder.

The addition amount of the binder is preferably 1% to 30% by mass, more preferably 3% to 25% by mass, and still more preferably 5% to 20% by mass with respect to the mass of the fiber bundled tissue-organized protein swollen by water.

It is preferable to adjust the fiber bundled tissue-organized protein to an appropriate size before mixing the fiber bundled tissue-organized protein with the binder.

Examples of a method of adjusting the size of the fiber bundled tissue-organized protein include a method of tearing the fiber bundled tissue-organized protein, a method of cutting the fiber bundled tissue-organized protein with a blade, and a method of using both.

In the adjustment of the size of the fiber bundled tissue-organized protein, the fiber bundled tissue-organized protein may be crushed near the outlet of the extruder in the above-described (preparation step), or may be crushed using a meat slicer or the like after being recovered from the extruder.

It is preferable that the fiber bundled tissue-organized protein has a lateral width of 2 mm or more and 35 mm or less and a longitudinal width of 35 mm or more and 500 mm or less before being mixed with the vegetable protein binder.

The thickness of the fiber bundled tissue-organized protein is not particularly limited, and it is preferable to appropriately adjust the thickness according to the thickness of the fiber bundled tissue-organized protein produced by an extruder or the like. The longitudinal width of the fiber bundled tissue-organized protein is, for example, preferably 0.1 times or more and 2 times or less the longitudinal width of the chunk-like meat substitute to be produced.

Here, in a case where the meat substitute to be produced contains other additives or the like, it is preferable to mix the other additives or the like with the roughly lean meat-like portion precursor or the like in the first step.

As the fiber bundled tissue-organized protein, the produced fiber bundled tissue-organized protein may be used, or a commercially available fiber bundled tissue-organized protein may be used.

In a case of producing the fiber bundled tissue-organized protein, it is preferable to produce the fiber bundled tissue-organized protein by extruding a raw material containing a vegetable protein from an extruder.

It is preferable that the extrusion conditions are as follows.

In a case of producing the tissue-organized protein, it is preferable to produce the tissue-organized protein by extruding a raw material containing a vegetable protein from an extruder.

It is preferable that the extrusion conditions are as follows.

· Raw material containing vegetable protein

The raw material containing a vegetable protein contains at least a vegetable protein, but from the viewpoint of extrusion efficiency, it is preferable that the raw material also contains water.
The content of water is preferably 2 parts by mass or more and 30 parts by mass or less with respect to 10 parts by mass of the protein.

· Extrusion conditions

The extruder is not particularly limited, and it is possible to use a known extruder such as a uniaxial screw extruder, a non-meshing different-direction rotating biaxial screw extruder, a meshing different-direction rotating biaxial screw extruder, a meshing co-rotating biaxial screw extruder, or the like.
Regarding the barrel temperature of the extruder, the temperature of the front half part of the barrel (a portion from the supply unit of the raw material of the lean meat-like portion to the center of the barrel) is preferably set to 60°C or higher and 100°C or lower, the temperature of the center of the barrel (the center of the length of the barrel in the axial direction) is preferably set to 90°C or higher and 170°C or lower, and the temperature of the rear half part of the barrel (a portion from the center of the barrel to the distal end of the barrel)is preferably set to 140°C or higher and 180°C or lower.
In the extruder, it is preferable that a die is mounted on the distal end of the barrel.
The die is preferably a die that makes it possible to obtain a sheet-shaped extruded product.
The gap (lip clearance) of the outlet of the die is preferably 1 mm or more and 10 mm or less.
The length of the die is preferably 30 mm or more.
The die may be a cooling die. Here, the cooling die refers to, for example, a die that is cooled by the circulation of a cooling liquid (water, glycol, or the like).
By using the cooling die, the expansion of the extruded raw material is likely to be suppressed. Therefore, the structured protein extruded using the cooling die is likely to be fibrous.
In a case of using the cooling die, the temperature of the outlet of the cooling die is preferably set to 90°C or higher and 120°C or lower.
In a case where a commercially available structured protein is used, as the fiber-bundled structured protein, What the cluck manufactured by Vegetarian Butcher, APEX 1000 manufactured by Fujii Oil Industries Co., Ltd., or the like can be used.

(Second step)

The second step is a step of stretching the first mixture.
In a case where the first mixture contains the fiber-bundled structured protein, it is preferable that a stretched mixture in which the fiber axial direction of the fiber-bundled structured protein is directed in one direction is obtained by stretching the first mixture obtained in the first step.
Here, the fiber axial direction of the fiber-bundled structured protein means the orientation of the fiber in the longitudinal direction forming the muscle-like tissue.
In addition, the expression that the fiber axial direction of the fiber-bundled structured protein is aligned in one direction includes a case where the fiber axial direction of the fiber-bundled structured protein is completely the same and a case where the fiber axial direction of the fiber-bundled structured protein is different but is directed in a certain direction.
The second step is preferably a step of stretching the first mixture to obtain a stretched mixture in which the alignment degree of the fiber direction of the fiber-bundled structured protein in the cross section along the stretching direction (hereinafter, also simply referred to as "specific alignment degree") is 1.1 or more.
From the viewpoint of the alignment degree, as a method of stretching the first mixture, any one of

(i) a method of passing the mixture in a direction perpendicular to a plane including a rotation axis of a set of rollers in a region surrounded by the set of rollers and pressing the mixture with the rollers to stretch the first mixture in a direction perpendicular to the plane including the rotation axis of the set of rollers,
(ii) a method of sandwiching the mixture between a set of rollers having parallel rotation axes and rotating in the same direction and pressing the first mixture by reducing a distance between the rollers while rotating the mixture to stretch the first mixture in a direction parallel to the rotation axis of the rollers,
(iii) a method of stretching the first mixture by gripping and pulling the surface of the first mixture, and
(iv) a method of stretching the first mixture by pressing the first mixture with a plate is preferable.

In addition, a stretching ratio of the first mixture is preferably 2 times or more, more preferably 4 times or more, and still more preferably 6 times or more.

The stretching ratio is a value obtained by dividing a length of the stretched mixture in the stretching direction by a length of the first mixture in the stretching direction.

The stretching direction refers to a direction in which the first mixture is stretched in the second step.

(Third step)

The manufacturing method of a meat substitute according to the embodiment of the present disclosure preferably includes, after the second step, a third step of molding the stretched mixture to obtain a molded body and then heating the molded body to cure the molded body.

In a case where the binder contains thermally non-reversible gel-forming polysaccharides, the formation of a gel containing the thermally non-reversible gel-forming polysaccharides is promoted by heating the molded body. As a result, the molded body is cured, and the shape of the chunk-like meat substitute is more easily maintained.

The shape of the molded body is preferably, for example, a shape similar to that of a steak, a meat for boiling, or the like.

A method of molding the stretched mixture is not particularly limited, and examples thereof include a method of cutting the stretched mixture and a method of deforming the stretched mixture by applying an external force to the stretched mixture. From the viewpoint of texture, a method of cutting the stretched mixture is preferable.

In a case of cutting the stretched mixture, it is preferable to cut the stretched mixture in a direction orthogonal to the fiber axial direction of the structured protein contained in the stretched mixture.

In a case of cutting the stretched mixture, it is preferable to cut the stretched mixture using a blade such as a cutter or a knife.

In the third step, in a case of molding the stretched mixture to obtain a molded body, it is preferable that the third step includes a step of cutting the stretched mixture perpendicularly to the alignment direction of the fibers and a step of bundling a plurality of the stretched mixtures before or after the cutting.

A plurality of the cut stretched mixtures may be bundled and molded with the fiber directions aligned, or a plurality of the stretched mixtures or the cut stretched mixtures may be bundled with the fiber directions aligned and then cut perpendicularly to the fiber direction to be molded.

By molding the stretched mixture such that the fiber direction is the film thickness direction of the steak, it is easy to obtain a meat substitute having an appearance similar to that of a steak of livestock meat.

The third step may include, after molding the stretched mixture to obtain a molded body, a step (hereinafter, also referred to as a fat-like portion forming step) of forming a pattern (marbled pattern) similar to a fat portion on a surface of the molded body for the purpose of making the appearance of the chunk-like meat substitute closer to the appearance of livestock meat.

The fat-like portion-forming step is preferably a step of forming, on the surface of the molded body, a groove having, for example, a depth of 100 μm or more and adhering oil and fat to the formed groove to form a fat-like portion.

Examples of a method of forming the groove on the surface of the molded body include a method of digging the surface with a blade and a method of forming the groove using a mold, and a method of forming the groove using a mold is preferable.

Subsequently, the oil and fat is adhered to the groove formed on the surface of the molded body to fill the groove, thereby forming a pattern similar to the fat.

In a case where the oil and fat is adhered to the groove formed on the surface of the molded body, a property of the oil and fat may be any of a liquid state, a semi-solid state in which a liquid and a solid are mixed, or a solid state, but is preferably a liquid state or a semi-solid state.

In a case where the oil and fat is adhered to the groove formed on the surface of the molded body, the oil and fat may be adhered in a state of an emulsion.

In a case where the oil and fat is adhered in a state of an emulsion, it is preferable that an emulsion containing a gelling agent, the oil and fat, and water (referred to as "emulsifier for gelling") is adhered to the groove formed on the surface of the molded body, and then the emulsifier for gelling, adhered to the groove, is gelled.

The emulsion for gelling is preferably an oil-in-water type emulsion.

An oil droplet diameter of the oil and fat in the emulsion for gelation is preferably 20 μm to 500 μm or less, more preferably 30 μm to 400 μm or less, and still more preferably 50 μm to 300 μm.

Examples of a method of gelating the emulsion for gelling adhering to the groove include a method of gelating the molded body to which the emulsion for gelling adheres in an aqueous solution containing a gelation promoting agent.

A method of heating the molded body is not particularly limited, and examples thereof include wet heating (a heating method using water as a heat source), dry heating (a heating method using a metal, a gas, or the like other than water as a heat source), and dielectric heating.

In a case of producing a raw meat-like appearance, from the viewpoint of heat resistance of the colorant, it is preferable that the molded body is vacuum-pouched and then uniformly and rapidly heated by a wet heating method.
Examples of the wet heating include a steaming method and a water bath method, and a water bath method is preferable from the viewpoint that the treatment can be performed uniformly and rapidly.
As a heating temperature of the molded body, for example, it is preferable to adjust the temperature to a condition in which the temperature inside the molded body is 70°C or higher and 100°C or lower.
The temperature inside the molded body is a value measured by a thermometer.
As the thermometer, for example, a data logger (TR-W550) manufactured by KEYENCE CORPORATION can be used. The internal temperature of the molded body can be measured by inserting a thermocouple into the chunk-like meat substitute during vacuum pouching.

Examples

Hereinafter, Examples will be described, but the fat mass composition and the manufacturing method of a fat mass composition according to the present disclosure are not limited to these Examples. It is noted that in the following description, "parts" and "%" are all based on mass unless otherwise specified.

<Example 1>

(I) Liquid droplet forming step

A water phase and an oil phase were prepared as follows.
Water phase: 99.5 parts by mass of tap water and 0.5 parts by mass of RYOTO Sugar Ester M-1695 (manufactured by Mitsubishi Chemical Corporation) as a surfactant were weighed so that the total thereof was 5 kg, and the resultant mixture was stirred for 30 minutes with Three-One Motor (manufactured by Shinto Scientific Co., Ltd.) and completely dissolved.
Oil phase: 1 part by mass of tallow oil SV23-3533 (manufactured by San-Ei Gen F.F.I., Inc.) and 99 parts by mass of coconut oil (manufactured by Alcapa, product name: Pia Cocoa) as a oil and fat were weighed to a total of 1 kg, and stirred with a three-one motor (manufactured by Shinto Scientific Co., Ltd.) for 10 minutes to be completely dissolved.
The membrane emulsification was carried out using a pipe-shaped SPG membrane (manufactured by SPG Technology Co., Ltd., pore diameter: 50 μm) with the water phase as a continuous phase and the oil phase as a dispersed phase. Specifically, a pipe-shaped SPG membrane was inserted and disposed in a tubular container, and then, the water phase was allowed to flow into the inside (the internal pipe line) of the pipe-shaped SPG membrane at a flow rate of 50 mL/min from one end of the container toward the other end of thereof, and the oil phase was allowed to flow to the outside (the outer pipe line (a flow path between the container and the SPG membrane)) of the pipe-shaped SPG membrane at a flow rate of 10 mL/min ((1) Liquid droplet forming step).
As a result, a liquid containing liquid droplets containing a oil and fat (hereinafter, also referred to as a liquid droplet dispersion liquid) was obtained. The particle diameter of the liquid droplets (granular bodies) containing a oil and fat was 190 μm, and the CV value was 19%.
Here, the particle diameter and the CV value of the liquid droplets contained in the liquid containing a oil and fat were measured in the same manner as the measurement of the average particle diameter of the granular body and the CV value of the particle diameter of the granular body described above.

(II) Oil and fat solidification step

The liquid droplet dispersion liquid was added to a separatory funnel and then allowed to stand for 30 minutes. Since the liquid droplet dispersion liquid was separated into a phase containing the liquid droplets containing a oil and fat and a water phase, the water phase was discharged from the separatory funnel, and the phase containing the liquid droplets containing a oil and fat was recovered.
The recovered phase containing the liquid droplets containing a oil and fat was allowed to stand and cooled in a refrigerator at a temperature of 5°C for one night (12 hours) to solidify the oil and fat, thereby obtaining a liquid containing particles (hereinafter, also referred to as a particle-containing liquid) ((2) oil and fat solidification step).

(III) Production of fat mass composition

1 part by mass of sodium alginate (KIMICA ALGIN I-1, manufactured by KIMICA Corporation) as an edible ionically crosslinkable polymer, 0.5 parts by mass of Ryoto Sugar Ester M-1695 (manufactured by Mitsubishi Chemical Corporation) as a surfactant, 21.4 parts by mass of Oligoto H-70 (manufactured by Mitsubishi Chemical Corporation), and

76.1 parts by mass of tap water were mixed to obtain a liquid containing an edible ionically crosslinkable polymer (hereinafter, also referred to as an ionically crosslinkable polymer solution).

100 parts by mass of the particle-containing liquid was added to 100 parts by mass of the ionically crosslinkable polymer solution, and the mixture was slowly stirred with a stirrer (three-one motor, manufactured by Yamato Scientific Co., Ltd.) to prepare a liquid (specific liquid A, viscosity: 700 mPa·s, temperature: 10°C) containing granular bodies containing an edible ionically crosslinkable polymer and a oil and fat.

5 parts by mass of calcium chloride (manufactured by FUJIFILM Wako Pure Chemical Corporation, food additive grade) and 21.4 parts by mass of Oligoto H-70 (manufactured by Mitsubishi Chemical Corporation) as a salt containing a cation were dissolved in 73.6 parts by mass of tap water to prepare a liquid containing a cation (specific liquid B, viscosity: 10 mPa·s, temperature: 15°C).

A plastic syringe (manufactured by Terumo Corporation, SS-50LZ) having an internal volume of 50 mL was filled with the specific liquid A, and the syringe was set in a syringe pump (manufactured by HARVARD Apparatus, PHD2000).

A polytetrafluoroethylene (PTFE) tube (manufactured by NICHIA Corporation, NAFRON (R) PTFE tube) having an inner diameter of 2 mm and an outer diameter of 3 mm was connected to a distal end of the syringe pump, and a nozzle having a size of 2 mm × 20 mm (rectangular shape) was connected to the distal end to produce a supply unit (indicated by reference numeral 101 in FIG. 3) of a liquid (specific liquid A) containing granular bodies containing an edible ionically crosslinkable polymer and a oil and fat ((3) mixing step).

A manufacturing apparatus 100 for a fat mass composition, including a supply unit 101 of a liquid (specific liquid A) containing granular bodies containing an edible ionically crosslinkable polymer and a oil and fat, a supply unit 102 of a liquid (specific liquid B) containing a cation, a shaping roller 103, and a support roller 104, shown in FIG. 3, was prepared.

As shown in FIG. 3, the shaping roller 103 has three shaping portions 107 including six protruding portions 106 and three singulation units 108 alternately.

All of the protruding portions 106 extend in a direction perpendicular to a tangent line of the outer periphery of the shaping roller 103 (triangular prism shape).

All of the singulation units 108 extend in a tangential direction of the outer periphery of the shaping roller 103 and in a direction perpendicular to the tangential direction (cube shape).

The interval between the adjacent protruding portions 106 in the shaping portion 107 was set to 5.0 mm. The length of the singulation unit 108 in the tangential direction of the outer periphery of the shaping roller 103 was set to 10.0 mm, and the interval between the adjacent singulation units 108 was set to 40.0 mm.

In addition, the minimum distance between the protruding portion 106 and the support roller 104 was set to 0.5 mm, and the minimum distance between the singulation unit 108 and the support roller 104 was set to 0.1 mm.

First, the specific liquid B was supplied from the supply unit 102 to the surface of the shaping roller 103 at a flow rate of 1 L/min.

Next, the specific liquid A was supplied to the surface of the shaping roller 103 to which the specific liquid B had been supplied from the supply unit 101 at a supply rate (in case of passing through the nozzle cross section) of 62.5 mm/sec. The rotation speed (roll surface) of the shaping roller 103 was set to 178.0 mm/sec.

The ratio of the rotation speed of the shaping roller to the supply rate of the specific liquid A to the shaping roller 103 (rotation speed of shaping roller/supply rate of specific liquid A) was 2.14.

Next, the specific liquid B was supplied from the supply unit 102 to the surface of the shaping roller 103 to which the specific liquid A had been supplied at a flow rate of 1 L/min. ((4) "Precursor production step", (5) "Shaping step")

After 0.275 seconds from the contact of the supplied specific liquid B with the specific liquid A, the obtained fat mass composition precursor was subjected to pressurization (molding) by the shaping portion 107 of the shaping roller 103 and the support roller 104, and then the fat mass composition after the molding (fat mass composition before the swelling degree adjustment) was subjected to singulation by the singulation unit 108 ((6) crosslinking step).

The fat mass composition was allowed to stand in the bathtub 105 for 11 minutes after the specific liquid A and the specific liquid B were brought into contact with each other, and then the fat mass composition was washed with tap water.

Thereafter, the fat mass composition washed with tap water was immersed in a stainless steel bathtub filled with a specific liquid C in which sodium glutamate (HEIMEI, Ajinomoto Co., Inc.) was dissolved in an amount of 5% by mass and oligotose H-70 (manufactured by Mitsubishi Chemical Corporation) was dissolved in an amount of 21.4% by mass, and allowed to stand for 60 minutes in a refrigerator at 4°C to adjust the swelling degree of the fat mass composition ((7) swelling degree adjustment step).

Thereafter, the fat mass composition was washed with tap water, 50 g thereof was taken out into a Ziploc (registered trademark, manufactured by Asahi Kasei Corporation), and the fat mass composition was heated by being subjected to a water bath in hot water heated to 80°C for 5 minutes, and then frozen in a freezer at -20°C for half a day to obtain a fat mass composition.

<Evaluation of fat mass composition>

1. Evaluation of shape

<Size: b/a>

The size of the obtained fat mass composition was measured. That is, in a cross section of the fat mass composition perpendicular to the longitudinal direction, in a case where a length of a line having the maximum length between two points was denoted by b and a length of a line having the maximum length among lines perpendicular to the line having the maximum length between two points was denoted by a, the length a was 3.2 mm and the length b was 11.8 mm. Therefore, b/a was 3.7.

In Examples and Comparative Examples described later, the length a and the length b were measured, and b/a was calculated, and the results are summarized in Tables 1 and 2.

<Sensory evaluation>

In addition, the appearance was evaluated by sensory evaluation based on the shape and the color. The evaluation was performed based on the following standards.

A: Appearance similar to beef tallow
B: Appearance slightly similar to beef tallow
C: Appearance different from beef tallow

2. Sensory evaluation of texture and palatability

Five specialized taste determination monitors performed sensory evaluation of texture and palatability using a five-taste identification test kit (Delico, Taste Kit Pro).

The taste determination monitors evaluated the crispness, bitterness, and aroma (beef tallow flavor) of the fat mass composition using a relative evaluation method based on the sheet-type capsule oil and fat, with the production conditions of the fat mass composition concealed.

The evaluation standards were as follows.

2-1. Crisp texture

5: No crisp texture is felt
4: Almost no crisp texture is felt
3: Crisp texture is felt, but it is at an acceptable level
2: Crisp texture is strongly felt
1: Crisp texture is very strongly felt

2-2. Bitterness

5: No bitterness is felt
4: Almost no bitterness is felt
3: Slight bitterness is felt, but it is at an acceptable level
2: Bitterness is felt
1: Strong bitterness is felt

2-3. Aroma such as beef tallow

5: Aroma is strongly felt
4: Aroma is felt
3: Aroma is felt to some extent
2: Almost no aroma is felt

1: No aroma is felt

In each item, the average score of the scores given by the five monitors was rounded off to the second decimal place and is shown in Table 1.
For the crispness, the bitterness, and the aroma, a score of 3.0 points or more was considered to be acceptable.

3. Swelling degree

The swelling degree was measured by the following method.
A sample was prepared by freezing the obtained fat mass composition (size: 1 piece: about 1.5 cm × 3 cm) at -20°C. After thawing the frozen sample at room temperature (25°C), each piece was placed in a vial container (maker: Nittoseiko Glass Co., Ltd., model number: SV-30), and dried in an oven (maker: AS ONE Corporation, model number: DO-450PC) at 80°C for 5 hours to obtain a dried product of the sample, and the dry mass was measured.
Thereafter, 20 mL of deionized water was put into the vial container, and the sample was swollen at 5°C for 24 hours. The swollen sample was placed on a Kimtowel (registered trademark) at room temperature, and another Kimtowel was placed on the sample to remove excess moisture. The mass of the drained sample is measured, and the measured value is defined as the mass after water absorption.
The swelling degree was determined by the following expression from the dry mass of the sample and the mass after water absorption.

swelling degree (%) = [(mass after water absorption - dry mass)/dry mass] × 100    Expression:

The measurement was performed three times by replacing the sample, and the average value thereof was defined as the swelling degree of the sample.
The results are shown in Tables 1 and 2.

<Example 2 to Example 11 and Comparative Example 1 to Comparative Example 3>

Fat mass compositions of Examples 2 to 11 and Comparative Examples 1 to 3 were obtained in the same manner as in Example 1, except that the sodium glutamate concentration in the specific liquid C (curing liquid) and the time for immersion in the specific liquid C (described as "curing time (min)" in the table) were changed as shown in Table 1 or Table 2.
The evaluation was performed in the same manner as in Example 1. The results are shown in Tables 1 and 2.

[Table 1]

| | | Example 1 | Example 2 | Example 3 | Example 4 | Example 5 | Example 6 | Example 7 |
|---|---|---|---|---|---|---|---|---|
| Production conditions | Curing liquid concentration (%) | 5 | 5 | 5 | 5 | 5 | 5 | 5 |
| | Curing time (min) | 11 | 10 | 8 | 4 | 8 | 8 | 8 |
| | Salt concentration in specific liquid C (%) | 5 | 5 | 5 | 5 | 5 | 5 | 5 |
| | Penetration Time of specific liquid C (min) | 60 | 60 | 60 | 60 | 30 | 360 | 1320 |
| Swelling degree test | Swelling degree (%) | 53 | 63 | 85 | 108 | 53 | 81 | 92 |

(continued)

| | | Example 1 | Example 2 | Example 3 | Example 4 | Example 5 | Example 6 | Example 7 |
|---|---|---|---|---|---|---|---|---|
| Sensory evaluation of texture and palatability | Crisp texture | 4.5 | 5.0 | 5.0 | 5.0 | 4.5 | 5.0 | 5.0 |
| | Bitter taste | 3.8 | 4.5 | 5.0 | 4.8 | 3.8 | 5.0 | 5.0 |
| | Aroma | 3.7 | 4.7 | 5.0 | 4.7 | 4.0 | 5.0 | 5.0 |
| Evaluation of shape (appearance) | b/a | 3.7 | 3 | 2.8 | 2.5 | 2.7 | 2.7 | 3 |
| | Sensory evaluation | A | A | A | A | A | A | A |

[Table 2]

| | | Example 8 | Example 9 | Example 10 | Example 11 | Comparative Example 1 | Comparative Example 2 | Comparative Example 3 |
|---|---|---|---|---|---|---|---|---|
| Production conditions | Curing liquid concentration (%) | 4 | 3.5 | 3 | 1 | 5 | 5 | 5 |
| | Curing time (min) | 8 | 8 | 8 | 8 | 180 | 0.3 | 8 |
| | Salt concentration in specific liquid C (%) | 5 | 5 | 5 | 5 | 5 | 5 | 5 |
| | Penetration Time of specific liquid C (min) | 60 | 60 | 60 | 60 | 60 | 60 | 0 |
| Swelling degree test | Swelling degree (%) | 56 | 85 | 90 | 105 | 39 | 160 | 29 |
| Sensory evaluation of texture and palatability | Crisp texture | 3.5 | 5.0 | 5.0 | 5.0 | 2.5 | 5.0 | 1.0 |
| | Bitter taste | 3.8 | 5.0 | 5.0 | 5.0 | 3.5 | 5.0 | 1.0 |
| | Aroma | 5.0 | 5.0 | 4.8 | 3.5 | 3.5 | 2.8 | 1.0 |
| Evaluation of shape (appearance) | b/a | 2.5 | 2.5 | 2.1 | 1.8 | 2.3 | 1.8 | 2.3 |
| | Sensory evaluation | A | A | A | B | A | B | A |

From the above results, the fat mass compositions of Examples had an appearance and texture similar to those of beef tallow, and the aroma and taste were also good.

On the other hand, the fat mass compositions of Comparative Examples 1 and 3, in which the swelling degree was too low, had a crispy texture that was not present in beef, and the fat mass composition of Comparative Example 2, in which the swelling degree was too high, had no crispy texture, but the aroma was poor and the appearance was different from that of beef tallow.

From the results shown in Tables 1 and 2, all of the fat mass compositions of Examples had an appearance and texture similar to those of beef tallow, and the aroma and taste were also good.

On the other hand, the fat mass compositions of Comparative Examples 1 and 3, in which the swelling degree was too low, had a crispy texture that was not present in beef, and the fat mass composition of Comparative Example 2, in which the swelling degree was too high, had no crispy texture, but the aroma was poor and the appearance was different from that of beef tallow.

(Measurement of cation concentration in fat mass composition)

As a representative example, the contents of monovalent cations and divalent cations in the fat mass composition of Example 3 and the fat mass composition of Comparative Example 3 were measured by the following method.

Using a single-edged razor, three samples (about 100 mg) of the central portion of the fat mass composition were prepared by slicing. Each of the sliced samples was transferred to a Teflon (registered trademark) vial container.

60% by mass of an aqueous nitric acid solution (5 mL) is added to each of the vial containers containing the samples, and the mixture is ashed, and then the mixture is diluted to 50 mL with pure water. The liquid that had been adjusted to a constant volume was used to quantify Na and Ca by ICP-OES (absolute calibration curve method). The results are shown in Table 3 below.

[Table 3]

| | Concentration of divalent cation (calcium ion) (ppm) | Concentration of monovalent cation (calcium ion) (ppm) |
|---|---|---|
| Example 3 | 1260±70 | 2400±90 |
| Comparative Example 3 | 2700±200 | 300±100 |

As shown in Table 3, the fat mass composition of Example 3 achieved a preferred aspect in which the fat mass composition contains 500 ppm or more of divalent cations and 500 ppm or more of monovalent cations, and the results in Table 1 confirmed that the flavor is good. On the other hand, in the fat mass composition of Comparative Example 3, the concentration of sodium ions, which are monovalent cations, is low. Therefore, it was also confirmed from the value of the monovalent ion concentration that not only the texture but also the flavor was inferior.

Explanation of References

10: fat mass composition
100: manufacturing apparatus of fat mass composition
101: supply unit of specific liquid A
102: supply unit of specific liquid B
103: shaping roller
104: support roller
105: bathtub
106: projection portion
107: molding portion
108: singulation unit
109: fat mass composition
110: washing section
A: specific liquid
A, B: specific liquid

B, X: longitudinal direction

a: length of line having maximum length among lines perpendicular to line having maximum length between two points in cross section (cross section taken along line A-A) perpendicular to longitudinal direction of fat mass composition 10

b: length of line having maximum length between two points in cross section (cross section taken along line A-A) perpendicular to longitudinal direction of fat mass composition 10

c: length of fat mass composition in longitudinal direction

d: length of line having minimum length among lines which are perpendicular to line having maximum length between two points in cross section (cross section taken along line A-A) perpendicular to longitudinal direction of fat mass composition 10 and in which ratio of length to line having maximum length between two points is 0.10 or more

The disclosure of JP2023-174766 filed on October 6, 2023 is incorporated in the present disclosure by reference.

All documents, patent applications, and technical standards described in the present disclosure are incorporated herein by reference to the same extent as in a case of being specifically and individually noted that individual documents, patent applications, and technical standards are incorporated by reference.

## Claims

**1.** A fat mass composition comprising:granular bodies containing oil and fat having a melting point of 0.1°C or higher; and

an edible and ionically crosslinkable polymer that is crosslinked with a cation,
wherein an average particle diameter of the granular bodies is 50 μm or more and 500 μm or less, and
a swelling degree is 50% or more and 110% or less.

**2.** The fat mass composition according to claim 1, wherein, in at least one cross section of the fat mass composition perpendicular to a longitudinal direction, in a case where a length of a line having a maximum length between two points is denoted by b and a length of a line having a maximum length among lines perpendicular to the line having the maximum length between the two points is denoted by a, b/a is 2.00 or more.

**3.** The fat mass composition according to claim 1 or 2, wherein the fat mass composition contains 500 ppm or more of a divalent cation and 500 ppm or more of a monovalent cation.

**4.** A manufacturing method of a fat mass composition, the manufacturing method comprising:

a step of forming liquid droplets containing oil and fat in an aqueous solution;
a step of solidifying the oil and fat in the liquid droplets to obtain particles containing the solidified oil and fat;
a step of adding an aqueous solution containing an edible and ionically crosslinkable polymer to the particles to obtain a crude fat mass forming mixture;
a step of bringing the crude fat mass forming mixture into contact with a liquid containing a cation to produce a fat mass composition precursor;
a step of shaping the fat mass composition precursor; and
a step of performing dropwise addition of the shaped fat mass composition precursor to a curing liquid containing a cation to obtain a fat mass composition.

**5.** The manufacturing method of a fat mass composition according to claim 4, further comprising: a step of immersing the obtained fat mass composition in an aqueous salt solution containing a monovalent cation to adjust a swelling degree.

FIG. 1

10
c
A
X
A

FIG. 2

10
d
a
b

FIG. 3

102
100
101
B
110
A
106
106
104
107
106
106
103
106
106
109
108
105

**INTERNATIONAL SEARCH REPORT**

International application No.
**PCT/JP2024/035676**

**A. CLASSIFICATION OF SUBJECT MATTER**

***A23L 5/00***(2016.01)i
FI: A23L5/00 L

According to International Patent Classification (IPC) or to both national classification and IPC

**B. FIELDS SEARCHED**

Minimum documentation searched (classification system followed by classification symbols)

A23L5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/176743 A1 (FUJIFILM CORPORATION) 21 September 2023 (2023-09-21) claim 1, paragraphs [0136]-[0138] | 1-5 |
| A | WO 2023/074879 A1 (FUJIFILM CORPORATION) 04 May 2023 (2023-05-04) paragraphs [0255]-[0257] | 1-5 |
| A | WO 2023/176742 A1 (FUJIFILM CORPORATION) 21 September 2023 (2023-09-21) paragraphs [0306]-[0318] | 1-5 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035676**

| Patent document cited in search report | Publication date (day/month/year) | Patent family member(s) | Publication date (day/month/year) |
|---|---|---|---|
| WO 2023/176743 A1 | 21 September 2023 | US 2024/0114923 A1<br>claim 1, paragraphs [0382]-[0403] | |
| WO 2023/074879 A1 | 04 May 2023 | US 2024/0114922 A1<br>paragraphs [0698]-[0713]<br>CN 118159142 A | |
| WO 2023/176742 A1 | 21 September 2023 | US 2024/0130396 A1<br>paragraphs [0463]-[0478] | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2041315 B
- JP H241315 B
- JP 2020162560 A
- JP 2023174766 A


### Non-patent literature cited in the description


- **C. M. HANSEN**. solubility parameters: a user's handbook. CEC press, 2007